# EUROPEAN PATENT SPECIFICATION

(11) **EP 4 626 665 B1**
(45) Date of publication and mention of the grant of the patent: **11.11.2026**
(21) Application number: 23828900.3
(22) Date of filing: 21.11.2023
(51) Int. Cl.: B29B 7/74, B29C 48/00, B29C 48/03, B29C 48/40, C08G 77/04, C08G 77/16, C08G 77/18, C08G 77/24, C08J 3/20, C08J 3/22, C08K 3/36

(54) **SILICONE MANUFACTURING**
VERFAHREN ZUR HERSTELLUNG EINER SILIKON
PROCÉDÉ DE PRÉPARATION D'UN SILICONE

(30) Priority: 30.11.2022 US 202263428793 P
(43) Date of publication of application: 08.10.2025
(73) Proprietor: Dow Silicones Corporation, Midland, Michigan 48686 (US); Dow Global Technologies LLC, Midland, MI 48674 (US)
(72) Inventor: KENNEY, James Andrew, Auburn, Michigan 48611 (US); GALLAGHER, Timothy J., Midland, Michigan 48667 (US); DRAKE, Robert A., Cardiff Road South Glamorgan Barry CF63 2YL (GB); GRIFFITH, Phillip, Midland, Michigan 48640 (US)
(74) Representative: Elkington and Fife LLP
(86) International application number: PCT/US2023/080691
(87) International publication number: WO 2024/118393

(56) References cited:
- EP-A1- 0 893 480
- WO-A1-2005/039847
- WO-A1-2023/219834

## Description

This relates to an improved process for the preparation of uncatalyzed (fluoro)silicone rubber bases which are prepared by the introduction of reinforcing fillers into high viscosity (i.e., greater than 1 million mPa.s at 25°C) silicone polymers and/or high viscosity (i.e., greater than 1 million mPa.s at 25°C) fluorosilicone polymers (often referred to in the industry as silicone polymer gums and fluorosilicone polymer gums respectively) and their copolymers, optionally in the presence of filler treating agents which are utilised in situ to render said fillers hydrophobic. The uncatalyzed silicone rubber bases are then further mixed with one or more catalysts/vulcanising agents as well as cross-linkers, when required and optionally a variety of additives to form curable one-part or multi-part silicone rubber compound compositions. This also relates to the silicone elastomers made by curing said curable one-part or multi-part silicone rubber compound compositions.

The high viscosity silicone polymers and high viscosity fluorosilicone polymers and their copolymers may be prepared from the polymerisation of organocyclosiloxane oligomers which typically comprise dimethylsiloxane units, methylvinylsiloxane units, trifluoroalkylmethylsiloxane units, e.g., trifluoropropylmethylsiloxane units and/or phenylmethylsiloxane units in the ring. The organocyclosiloxane oligomers typically have an average of from 3 to 5 siloxane units in an organocyclosiloxane ring, examples including octamethylcyclotetrasiloxane, hexamethylcyclotrisiloxane, decamethylcyclopentasiloxane, cyclopenta(methylvinyl)siloxane, cyclotri(methylvinyl)siloxane & cyclotetra(methylvinyl)siloxane cyclotetra(phenylmethyl)siloxane, cyclopentamethylhydrosiloxane, trifluoropropymlethylcyclotrisiloxane and mixtures thereof. Typically, the organocyclosiloxane oligomers and mixtures thereof, either alone or together with suitably end-blocked polydiorganosiloxanes, undergo a polymerisation process involving the ring opening of the organocyclosiloxane oligomers in the presence of a catalyst such as an acid or base. An equilibrium between the desired high-molecular compounds and a mixture of organocyclosiloxane compounds is created in the course of the polymerisation reaction. The resulting equilibrium largely depends on the nature and number of organocyclosiloxane compound(s), the catalyst used and the polymerisation process temperature. Such polymerisation processes are generally carried out in the absence of a solvent. Typically end-blocking agents are used to add functionality and regulate the molecular weight of the resulting polymers.

For example, silicone polymers and copolymers comprising fluoroalkyl groups such as trifluoropropyl groups or perfluoroalkyl groups may be, for the sake of example, either:

R¹ (R²)₂ SiO-((R⁴)(R³) SiO)ₘ-Si(R¹)(R²) (1)

R¹ (R²)₂ SiO-((R⁴)(R³) SiO)ₘ-((R²)₂ SiO)_{q} Si(R¹)(R²)₂ (II)

in which
each R² is the same or different and is a saturated monovalent hydrocarbon group such as an alkyl group, an aryl group or an alkaryl group, a fluoroalkyl group or a perfluoroalkyl group;
each R¹ is -OH, hydrogen an alkenyl group or an alkynyl group;
each R³ is a fluoroalkyl group or perfluoroalkyl group;
each R⁴ is R² or an unsaturated monovalent hydrocarbon group such as an alkenyl group or an alkynyl group; and q and m are positive integers. Copolymers may be random or block copolymers. The resulting silicone polymer gums and fluorosilicone polymer gums and their copolymers (hereafter collectively referred to as (fluoro)silicone gum(s)) are utilised in the preparation of uncatalyzed bases of said (fluoro)silicone gum(s) (hereinafter referred to collectively as (fluorosilicone base(s)) which are subsequently modified with catalysts and optional additives in the preparation of catalysed, curable one part or multi-part silicone rubber compound compositions often referred to as being "high consistency" silicone rubber (HCR) or fluorosilicone rubber (FSR) compound compositions (henceforth referred to as "(fluoro)silicone rubber compound compositions") which upon cure/vulcanisation provide elastomers having outstanding mechanical and electrical insulating properties.

The (fluoro)silicone rubber bases are generally prepared in a first production stage, sometimes referred to as a "hot mixing" stage, during which reinforcing fillers are introduced into the (fluoro)silicone gums. Unless said reinforcing fillers have been pre-treated, filler treating agents are also utilised in situ to render the outer surfaces of said fillers hydrophobic. One or more optional "non-cure" additives such as extending fillers (sometimes referred to as non-reinforcing fillers) or alkenyl processing aids may be introduced in this first stage providing they do not include any catalysts/vulcanising agents. This results in the preparation of uncatalyzed (fluoro)silicone rubber bases which may be stored and packaged for sale or future use or may be used in a second stage sometimes referred to as a cold mixing stage or compounding stage.

The second stage, sometimes referred to as the cold mixing stage, involves the introduction of at least one of the following: catalysts/vulcanising agents and cross-linkers (if required in the latter case) as well as other additives, such as cure inhibitors, additional fillers, pigments, property modifiers and the like into the uncatalyzed (fluoro)silicone rubber base(s) resulting from the first stage. The ingredients and additives introduced during the second stage are thoroughly mixed into the base to ensure an even distribution in the resulting (fluoro)silicone rubber compound compositions(s). If necessary, in cases where the compound composition is to be hydrosilylation (addition) cured, uncatalyzed (fluoro)silicone rubber bases may be divided so that different additives are introduced into different parts, typically e.g., into two parts a part A and a part B with part A containing the catalyst and part B containing the cross-linker. The two parts are mixed together prior to cure.

The hot mixing utilised in the manufacture of said (fluoro)silicone rubber base can involve, for the sake of example, metered addition of filler into the (fluoro)silicone gums, to ensure the filler is both sufficiently well dispersed therein and is suitably hydrophobically treated. It also involves the removal of volatiles and upon completion of mixing has to be cooled to enable safe transfer and if required packaging.

Hence, it is a time intensive, energy intensive and costly process. Far more so for the hot mixing stage than the compounding or cold stage utilised to introduce catalysts and other curatives and other additional additives to make a compound composition. One problem, for example, is that given the nature of the (fluoro)silicone gums and the historical mixer technology available to manufacturers e.g., sigma blade mixers, the production of uncatalyzed (fluoro)silicone rubber base(s) was only possible with reinforcing filler present in an amount of up to a maximum of about 35 wt.% of said base(s).

Patent document WO 2023/219834 describes a process for the preparation of high viscosity silanol-terminated silicone polymers. The process involves the ring opening polymerisation of an organopolysiloxane oligomer comprising alkenyl and trifluoroalkyl groups in a reactor, followed by the introduction of a chain initiator and a catalyst in order to obtain a silicone polymer gum. After quenching the obtained polymer, the silicone is cooled down and blended with other additives such as fillers. The reactor used for carrying out the ring-opening polymerisation is a conical screw dump extruder comprising a conical twin screw chamber. In particular, the conical screw dump extruder are designed to mix the pre-formed silicone polymer and fillers into a base material by using low viscosity organocyclosiloxane oligomers as starting materials.

Patent document WO 2005/039847 relates to a mixer comprising a cone-shape twin-screw extruder (Colmex type extruder). The mixer enables materials to be compounded, such as the preparation of silicone rubber and fillers blends and provides the preparation of homogeneous silicone/filler blend with excellent distribution and dispersion of the filler into the silicone component.

Finally patent document EP 0 893 480 describes curable fluorosilicone compositions prepared by loading a silicone polymer into a mixer under dry nitrogen, and mixing at a temperature below 80°c in order to increase the William plasticity number of the silicone. The silicone is then compounded with silica under dry nitrogen until an homogeneous composition is obtained. In particular, the fluorosilicone composition comprises 25.5 wt.% of silica as filler but the description indicates that the amount of filler present in the silicone composition may be in the range of 5-50 wt.%.

Consequently, there has been a long-term wish in the industry to improve the efficiency and reduce the necessary time required for the hot mixing utilised in the manufacture of said (fluoro)silicone rubber base per kg of finished compound composition as it potentially can provide a significant economic benefit by increasing productivity in the base manufacturing process where costs are most high and the technology is most complex.

There is provided herein a process for the preparation of an uncatalyzed (fluoro)silicone rubber base which is prepared by the introduction of reinforcing fillers and optionally hydrophobing treating agents into one or more silicone polymers, fluorosilicone polymers or copolymers thereof, in each instance said one or more silicone polymers, fluorosilicone polymers or copolymers thereof having a Williams plasticity of at least 100mm/100 in accordance with ASTM D-926-08, which process comprises the steps of:
(i) Introducing, as a first starting ingredient the one or more silicone polymers, fluorosilicone polymers or copolymers thereof in each instance having a Williams plasticity of at least 100mm/100 in accordance with ASTM D-926-08, into a mixing chamber of a mixer at approximately 25°C optionally in an inert atmosphere and mixing;
(ii) Gradually introducing, as a second starting ingredient, one or more reinforcing fillers and optionally a third starting ingredient, one or more hydrophobing filler treating agents into the mixing chamber of the mixer whilst continuing mixing until the mixer has been charged with a predetermined amount of reinforcing filler of at least 38 wt. % of the total base starting ingredients to form a base mixture;
(iii) Optionally maintaining the temperature of the base mixture in the mixing chamber within a pre-determined range of from 100 and 200°C for a period of up to 6 hours to remove volatiles from the step (ii), base mixture, to form a step (iii) base mixture which step (iii), when utilised, may be carried out under vacuum;
(iv) Cooling the resulting step (ii) base mixture or step (iii) base mixture to a temperature between 25°C and 120°C; and prior to, during or subsequent to step (iv)
(v) Reducing the wt. % of reinforcing filler in the step (ii) base mixture or step (iii) base mixture to a pre-defined amount by mixing the step (ii) base mixture or step (iii) base mixture with additional one or more silicone polymers, fluorosilicone polymers or copolymers thereof having a Williams plasticity of at least 100mm/100 in accordance with ASTM D-926-08, to form an uncatalyzed (fluoro)silicone rubber base;
characterised in that the mixer utilised for at least steps (i), (ii) and (iii) is a conical screw dump extruder comprising a conical twin screw mixing chamber, said conical twin screw mixing chamber housing two counter-rotating conical screws converging towards an extrusion die having an entrance and an exit wherein passage through said extrusion die is controlled by an occlusion means such that the exit of said extrusion die is adapted to be closed by the occlusion means until the product of step (iii), (iv) or (v) is to be extruded from said conical screw dump extruder and opened subsequent to step (iii), (iv) or (v) if or when said uncatalyzed (fluoro)silicone rubber base is to be further processed or stored outside said conical screw dump extruder such that during mixing the base mixture is driven towards extrusion die by the pair of counter-rotating conical screws, and then forced to go back when the extrusion die is closed by the occlusion means and then subsequent to step (iii), (iv) or (v) is opened, to allow the product of said step (iii), (iv) or (v) to be extruded through said extrusion die for further processing and/or storage.

There is also provided an uncatalyzed (fluoro)silicone rubber base, which is the product of the above process.

There is also provided an uncatalyzed (fluoro)silicone rubber base, which is obtained or obtainable by way of the above process.

There is also provided a use of a conical screw dump extruder comprising a conical twin screw mixing chamber, said conical twin screw mixing chamber housing two counter-rotating conical screws converging towards an extrusion die having an entrance and an exit wherein passage through said extrusion die is controlled by an occlusion means such that the exit of said extrusion die is adapted to be closed by the occlusion means in a process for the preparation of an uncatalyzed (fluoro)silicone rubber base which is prepared by the introduction of reinforcing fillers and optionally hydrophobing treating agents into one or more silicone polymers, fluorosilicone polymers or copolymers thereof, in each instance said one or more silicone polymers, fluorosilicone polymers or copolymers thereof having a Williams plasticity of at least 100mm/100 in accordance with ASTM D-926-08, which process comprises the steps of:
(i) Introducing, as a first starting ingredient the one or more silicone polymers, fluorosilicone polymers or copolymers thereof in each instance having a Williams plasticity of at least 100mm/100 in accordance with ASTM D-926-08, into a mixing chamber of a mixer at approximately 25°C optionally in an inert atmosphere and mixing;
(ii) Gradually introducing, as a second starting ingredient, one or more reinforcing fillers and optionally a third starting ingredient, one or more hydrophobing filler treating agents into the mixing chamber of the mixer whilst continuing mixing until the mixer has been charged with a predetermined amount of reinforcing filler of at least 38 wt. % of the total base starting ingredients to form a base mixture;
(iii) Optionally maintaining the temperature of the base mixture in the mixing chamber within a pre-determined range of from 100 and 200°C for a period of up to 6 hours to remove volatiles from the step (ii), base mixture, to form a step (iii) base mixture which step (iii), when utilised, may be carried out under vacuum;
(iv) Cooling the resulting step (ii) base mixture or step (iii) base mixture to a temperature between 25°C and 120°C; and prior to, during or subsequent to step (iv);
(v) Reducing the wt. % of reinforcing filler in the step (ii) base mixture or step (iii) base mixture to a pre-defined amount by mixing the step (ii) base mixture or step (iii) base mixture with additional one or more silicone polymers, fluorosilicone polymers or copolymers thereof having a Williams plasticity of at least 100mm/100 in accordance with ASTM D-926-08, to form an uncatalyzed (fluoro)silicone rubber base;

Wherein during mixing the base mixture is driven towards extrusion die by the pair of counter-rotating conical screws, and then forced to go back when the extrusion die is closed by the occlusion means and then subsequent to step (iii), (iv) or (v) is opened, to allow the product of said step (iii), (iv) or (v) to be extruded through said extrusion die for further processing and/or storage.

There is provided herein a process for the preparation of a catalysed (fluoro)silicone rubber compound compositions which is prepared by the introduction of reinforcing fillers and optionally hydrophobing treating agents into one or more silicone polymers, fluorosilicone polymers or copolymers thereof, in each instance said one or more silicone polymers, fluorosilicone polymers or copolymers thereof having a Williams plasticity of at least 100mm/100 in accordance with ASTM D-926-08, which process comprises the steps of:
(i) Introducing, as a first starting ingredient the one or more silicone polymers, fluorosilicone polymers or copolymers thereof in each instance having a Williams plasticity of at least 100mm/100 in accordance with ASTM D-926-08, into a mixing chamber of a mixer at approximately 25 °C optionally in an inert atmosphere and mixing;
(ii) Gradually introducing, as a second starting ingredient, one or more reinforcing fillers and optionally a third starting ingredient, one or more hydrophobing filler treating agents into the mixing chamber of the mixer whilst continuing mixing until the mixer has been charged with a predetermined amount of reinforcing filler of at least 38 wt. % of the total base starting ingredients to form a base mixture;
(iii) Optionally maintaining the temperature of the base mixture in the mixing chamber within a pre-determined range of from 100 and 200 °C for a period of up to 6 hours to remove volatiles from the step (ii), base mixture, to form a step (iii) base mixture which step (iii), when utilised, may be carried out under vacuum;
(iv) Cooling the resulting step (ii) base mixture or step (iii) base mixture to a temperature between 25°C and 120 °C; and prior to, during or subsequent to step (iv);
(v) Reducing the wt. % of reinforcing filler in the step (ii) base mixture or step (iii) base mixture to a pre-defined amount by mixing the step (ii) base mixture or step (iii) base mixture with additional one or more silicone polymers, fluorosilicone polymers or copolymers thereof having a Williams plasticity of at least 100mm/100 in accordance with ASTM D-926-08, to form an uncatalyzed (fluoro)silicone rubber base;
(vi) At a temperature of between 25°C and 60°C, introducing at least one catalyst or vulcanising agent and optionally one or more additives, selected from cross-linkers, cure inhibitors, additional fillers, pigments, property modifiers and the like;
characterised in that the mixer utilised for at least steps (i), (ii) and (iii) is a conical screw dump extruder comprising a conical twin screw mixing chamber, said conical twin screw mixing chamber housing two counter-rotating conical screws converging towards an extrusion die having an entrance and an exit wherein passage through said extrusion die is controlled by an occlusion means such that the exit of said extrusion die is adapted to be closed by the occlusion means until the product of step (iii), (iv) or (v) is to be extruded from said conical screw dump extruder and opened subsequent to step (iii), (iv) or (v) if or when said uncatalyzed (fluoro)silicone rubber base is to be further processed or stored outside said conical screw dump extruder such that during mixing the base mixture is driven towards extrusion die by the pair of counter-rotating conical screws, and then forced to go back when the extrusion die is closed by the occlusion means and then subsequent to step (iii), (iv) or (v) is opened, to allow the product of said step (iii), (iv) or (v) to be extruded through said extrusion die for further processing and/or storage; and wherein said step (vi) takes place simultaneously with step (v) or subsequent to Step (v).

There is also provided a catalysed (fluoro)silicone rubber compound composition which is the product of the above process.

There is also provided a catalysed (fluoro)silicone rubber compound composition which is obtained or obtainable by way of the above process.

There is also provided a use of a conical screw dump extruder comprising a conical twin screw mixing chamber, said conical twin screw mixing chamber housing two counter-rotating conical screws converging towards an extrusion die having an entrance and an exit wherein passage through said extrusion die is controlled by an occlusion means such that the exit of said extrusion die is adapted to be closed by the occlusion means in a process for the preparation of an uncatalyzed (fluoro)silicone rubber base which is prepared by the introduction of reinforcing fillers and optionally hydrophobing treating agents into one or more silicone polymers, fluorosilicone polymers or copolymers thereof, in each instance said one or more silicone polymers, fluorosilicone polymers or copolymers thereof having a Williams plasticity of at least 100mm/100 in accordance with ASTM D-926-08, which process comprises the steps of:
(i) Introducing, as a first starting ingredient the one or more silicone polymers, fluorosilicone polymers or copolymers thereof in each instance having a Williams plasticity of at least 100mm/100 in accordance with ASTM D-926-08, into a mixing chamber of a mixer at approximately 25 °C optionally in an inert atmosphere and mixing;
(ii) Gradually introducing, as a second starting ingredient, one or more reinforcing fillers and optionally a third starting ingredient, one or more hydrophobing filler treating agents into the mixing chamber of the mixer whilst continuing mixing until the mixer has been charged with a predetermined amount of reinforcing filler of at least 38 wt. % of the total base starting ingredients to form a base mixture;
(iii) Optionally maintaining the temperature of the base mixture in the mixing chamber within a pre-determined range of from 100 and 200 °C for a period of up to 6 hours to remove volatiles from the step (ii), base mixture, to form a step (iii) base mixture which step (iii), when utilised, may be carried out under vacuum;
(iv) Cooling the resulting step (ii) base mixture or step (iii) base mixture to a temperature between 25 °C and 120 °C; and prior to, during or subsequent to step (iv);
(v) Reducing the wt. % of reinforcing filler in the step (ii) base mixture or step (iii) base mixture to a pre-defined amount by mixing the step (ii) base mixture or step (iii) base mixture with additional one or more silicone polymers, fluorosilicone polymers or copolymers thereof having a Williams plasticity of at least 100mm/100 in accordance with ASTM D-926-08, to form an uncatalyzed (fluoro)silicone rubber base;
(vi) At a temperature of between 25°C and 60°C, introducing at least one catalyst or vulcanising agent and optionally one or more additives, selected from cross-linkers, cure inhibitors, additional fillers, pigments, property modifiers and the like;

Wherein during mixing the base mixture is driven towards extrusion die by the pair of counter-rotating conical screws, and then forced to go back when the extrusion die is closed by the occlusion means and then subsequent to step (iii), (iv) or (v) is opened, to allow the product of said step (iii), (iv) or (v) to be extruded through said extrusion die for further processing and/or storage; and wherein said step (vi) takes place simultaneously with step (v) or subsequent to Step (v).

It will be appreciated that this disclosure relates to a process for making an uncatalyzed (fluoro)silicone rubber base which can then consequently be used to make curable compound compositions by having catalysts, cross-linkers and the like added into said base. It does not relate to a polymerisation process for making the silicone polymers, fluorosilicone polymers or copolymers thereof having a Williams plasticity of at least 100mm/100 in accordance with ASTM D-926-08 which are one of the starting ingredients in the process described herein.

An uncatalyzed (fluoro)silicone rubber base is intended to mean a mixture of (fluoro)silicone polymer having a Williams plasticity of at least 100mm/100 in accordance with ASTM D-926-08 and reinforcing filler which does not contain any curatives and/or cross-linkers, i.e. it is uncatalyzed and as such, such a mixture cannot cure into an elastomer or the like until it is transformed into a curable compound composition containing curatives and/or cross-linkers (if required) as well as other additives.

Reinforcing fillers are incorporated into silicone rubber materials to enhance strength and toughness in a cured elastomeric material. Reinforcing fillers are highly surface active and have a high surface area, which reinforces the cured siloxane polymer matrix through hydrogen bonding and other means. Extending fillers (sometimes referred to as non-reinforcing fillers) are generally lower surface area and are provided mainly to decrease the cost of the silicone rubber. Reinforcing fillers usually achieve at least one of the following mechanical properties enhancing Excellent tensile-strength, tear-strength and flex-fatigue resistance, increase, reduced crepe hardening, improve compression-set resistance and can provide silicone elastomers with e.g., exceptional resistance to heat-aging.

It has been surprisingly found that the utilisation of a conical screw dump extruder instead of the usual historic mixers such as sigma blade mixers enables a several weight % increase in the amount of reinforcing filler which can be introduced into uncatalyzed (fluoro)silicone rubber base before saturation is reached (at which point the base will crumble and no longer be continuous). Such an increase is significant in that it increases the efficiency i.e., productivity of base manufacture by decreasing the hot mixing time per kg of finished base resulting in a consequential economic benefit and increase in hot mixer productivity. This increase in productivity is achieved through the ability to make a more highly filled uncatalyzed (fluoro)silicone rubber base product than can be made using current mixing technologies, such as sigma blade mixers where the absolute maximum filler level of incorporation appears to be no more than 35 wt. % of the base. This increase in filler loading also results in a higher plasticity material which is under higher shear rate during mixing. This higher shear is thought to result in improved dispersion of the fillers which seems to reduce the Williams plasticity of the resulting base material and may increase clarity of cured products incorporating such base material.

Furthermore, the filler content of the bases produced when using said conical screw dump extruders is usually reduced or cut-back to predefined concentrations of a less-filled base using additional silicone polymers, fluorosilicone polymers or copolymers thereof. These may be silicone polymers, fluorosilicone polymers or copolymers thereof having a Williams plasticity of at least 100mm/100 in accordance with ASTM D-926-08, but alternatively include shorter chain silicone polymers, fluorosilicone polymers or copolymers thereof if desired. It was found that such bases which are reduced or cut-back to predefined concentrations were of lower Williams plasticity and therefore easier to use during compounding and indeed elastomeric materials made from compound compositions produced using such bases gave improved mechanical properties when compared to elastomeric materials made using standard mixers such as sigma blade mixers.

The uncatalyzed (fluoro)silicone rubber base prepared by the process herein comprises two essential starting ingredients:
(a) silicone polymers, fluorosilicone polymers or copolymers thereof, in each instance having a Williams plasticity of at least 100mm/100 in accordance with ASTM D-926-08, i.e. (fluoro)silicone gums and
(b) reinforcing filler.

When the reinforcing filler has been pre-treated, no other ingredient is essential and the base is prepared by mixing the two together with any optional non-cure additives desired. Economically, the use of such pre-treated fillers can greatly increase the costs of making uncatalyzed (fluoro)silicone rubber base and as such, not least for economic reasons, in the vast majority of situations this is not preferred.

Hence, the reinforcing filler is usually introduced into the mixer in an untreated form and its outer surface is rendered hydrophobic through an in situ treating process during base preparation in which case a third ingredient is required to generate uncatalyzed (fluoro)silicone rubber base, a suitable treating agent (c) to render the filler hydrophobic.

### Starting ingredient/component (a)

Starting ingredient/component (a) is an organopolysiloxane polymer having a Williams plasticity of at least 100mm/100 measured in accordance with ASTM D-926-08. Because of the difficulty in measuring the viscosity of highly viscous fluids, (fluoro)silicone gums tend to be defined by way of their Williams plasticity (the ability of a specimen to produce a compressive deformation under external forces and to retain deformation after removing the external force) as opposed to by viscosity. Typically, silicone polymer gums can have a Williams plasticity value of up to about 400mm/100 in the case of fluorosilicone polymer gums measured in accordance with ASTM D-926-08.

Each organopolysiloxane polymer of component (a) comprises multiple siloxy units, of formula (I):

R'ₐSiO_{(4-a)/2} (I)

The subscript "a" is 0, 1, 2 or 3.

Siloxy units may be described by a shorthand (abbreviated) nomenclature, namely - "M," "D," "T," and "Q", when each R' is any suitable group typically an organic group e.g., an alkyl group. The M unit corresponds to a siloxy unit where a = 3, that is R'₃SiO_{1/2}; the D unit corresponds to a siloxy unit where a = 2, namely R'₂SiO_{2/2}; the T unit corresponds to a siloxy unit where a = 1, namely R'₁SiO_{3/2}; the Q unit corresponds to a siloxy unit where a = 0, namely SiO_{4/2}.

The organopolysiloxane polymer of component (a) is generally linear or substantially linear by which we mean that it contains less than 2.5 wt. % of branching, alternatively, less than 1.5 wt. % of branching, alternatively less than 0.5 wt. % of branching, alternatively less than 0.1 wt. % of branching due to the presence of T units (as previously described) within the molecule, hence the average value of a in structure (I) is about 2.

Each organic group R' in formula (I), described above, is independently selected from an aliphatic hydrocarbyl group, a substituted aliphatic hydrocarbyl group, an aromatic group or a substituted aromatic group. Each aliphatic hydrocarbyl group may be exemplified by, but is not limited to, alkyl groups having from 1 to 20 carbons per group, alternatively 1 to 15 carbons per group, alternatively 1 to 12 carbons per group, alternatively 1 to 10 carbons per group, alternatively 1 to 6 carbons per group or cycloalkyl groups such as cyclohexyl. Specific examples of alkyl groups may include methyl, ethyl, propyl, pentyl, octyl, undecyl, and octadecyl groups, alternatively methyl and ethyl groups. Substituted aliphatic hydrocarbyl group are preferably non-halogenated substituted alkyl groups.

The aliphatic non-halogenated organyl groups are exemplified by, but not limited to alkyl groups as described above with a substituted group such as oxygen containing groups such as polyoxyalkylene groups, carbonyl groups, alkoxy groups and hydroxyl groups. Examples of aromatic groups or substituted aromatic groups are phenyl groups and substituted phenyl groups with substituted groups as described above.

Component (a) may, alternatively comprise D unts of structure (I) where one R' is aliphatic group or aromatic group and the other is a fluoroalkyl group such as trifluoropropyl trifluoroethyl, and nonafluorohexyl groups or a perfluoroalkyl group such as, for example, CF₃-, C₂F₅-, C₃F₇-, such as CF₃CF₂CF₂- or (CF₃)₂CF-, C₄F₉-, such as CF₃CF₂CF₂CF₂-, (CF₃)₂CFCF₂-, (CF₃)₃C- and CF₃CF₂(CF₃)CF-; C₅F₁₁ such as CF₃CF₂CF₂CF₂CF₂-, C₆F₁₃-, such as CF₃(CF₂)₄CF₂-; C₇F₁₄-, such as CF₃(CF₂CF₂)₃-; and C₈F₁₇-.

When the base is being prepared as an intermediate for the manufacture of compound compositions containing peroxide catalysts because the peroxide cure proceeds via a radical reaction pathway, although commonly such (fluoro)silicone gums comprise two or more alkenyl groups or alkynyl groups, no reactive groups are necessary and as such the (fluoro)silicone gums may have no reactive groups present e.g., no alkenyl groups or alkynyl groups or even may have hydroxyl terminal groups.

However, if the intention is to make a compound composition which are hydrosilylation or addition curable using e.g., platinum catalysts and cross-linkers containing e.g., multiple Si-H bonds, the (fluoro)silicone gums require at least two unsaturated groups to be present per molecule, typically alkenyl groups or alkynyl groups. When present, the unsaturated groups of component (a) may be positioned either terminally or pendently on the organopolysiloxane polymer, or in both locations. When present, the unsaturated groups of component (a) may be alkenyl groups or alkynyl groups as described above. Each alkenyl group, when present, may comprise for example from 2 to 30, alternatively 2 to 24, alternatively 2 to 20, alternatively 2 to 12, alternatively 2 to 10, and alternatively 2 to 6 carbon atoms. When present the alkenyl groups may be exemplified by, but not limited to, vinyl, allyl, methallyl, isopropenyl, propenyl, and hexenyl and cyclohexenyl groups. Each alkynyl group, when present, may also have 2 to 30, alternatively 2 to 24, alternatively 2 to 20, alternatively 2 to 12, alternatively 2 to 10, and alternatively 2 to 6 carbon atoms. Examples of alkynyl groups may be exemplified by, but not limited to, ethynyl, propynyl, and butynyl groups. Preferred examples of the unsaturated groups of component (a) include vinyl, propenyl, isopropenyl, butenyl, allyl, and 5-hexenyl.

Hence, the (fluoro)silicone gums may for example be trialkyl terminated, alkenyldialkyl terminated alkynyldialkyl terminated, dialkylsilanol terminated or may be terminated with any other suitable terminal group combination, providing each polymer has a Williams plasticity of at least 100mm/100 measured in accordance with ASTM D-926-08.

Hence component (a) may, for the sake of example, be:
a dialkylalkenyl terminated polydimethylsiloxane, e.g., dimethylvinyl terminated polydimethylsiloxane; a dialkylalkenyl terminated dimethylmethylphenylsiloxane, e.g., dimethylvinyl terminated dimethylmethylphenylsiloxane; a trialkyl terminated dimethylmethylvinyl polysiloxane; a dialkylvinyl terminated dimethylmethylvinyl polysiloxane copolymer; a dialkylvinyl terminated methylphenylpolysiloxane, a dialkylalkenyl terminated
methylvinylmethylphenylsiloxane; a dialkylalkenyl terminated methylvinyldiphenylsiloxane; a dialkylalkenyl terminated methylvinyl methylphenyl dimethylsiloxane; a trimethyl terminated methylvinyl methylphenylsiloxane; a trimethyl terminated methylvinyl diphenylsiloxane; or a trimethyl terminated methylvinyl methylphenyl dimethylsiloxane or fluorosilicone polymer gums such as trimethyl terminated polymethyltrifluoropropylsiloxane, dimethylalkenyl terminated polymethyltrifluoropropylsiloxane, e.g., dimethylvinyl terminated polymethyltrifluoropropylsiloxane, dimethylsilanol terminated polymethyltrifluoropropylsiloxane;
trimethyl terminated polymethylperfluoropropylsiloxane, dimethylalkenyl terminated polymethylperfluoropropylsiloxane, e.g., dimethylvinyl terminated polymethyltrifluoropropylsiloxane or dimethylsilanol terminated polymethyltrifluoropropylsiloxane.

In each case component (a) has a Williams plasticity of at least 100mm/100 measured in accordance with ASTM D-926-08, alternatively at least 125mm/100 measured in accordance with ASTM D-926-08, alternatively at least 140mm/100 measured in accordance with ASTM D-926-08. Typically, (fluoro)silicone gums have a Williams plasticity of from about 100mm/100 to 400mm/100 measured in accordance with ASTM D-926-08.

### Starting Ingredient/component (b)

Component (b) is at least one reinforcing silica filler. Preferably said reinforcing silica fillers are in a finely divided form. The reinforcing silica fillers (b) may be exemplified by fumed silica, colloidal silicas and/or a precipitated silica.

Precipitated silica, fumed silica and/or colloidal silicas are particularly preferred because of their relatively high surface area, which is typically at least 50 m²/g (BET method in accordance with ISO 9277: 2010); alternatively, having surface areas of from 50 to 450 m²/g (BET method in accordance with ISO 9277: 2010), alternatively having surface areas of from 50 to 300 m²/g (BET method in accordance with ISO 9277: 2010), are typically used. All these types of silica are commercially available. Reinforcing silica filler(s) of component (b) are naturally hydrophilic and are treated with one or more treating agents (starting ingredient/component (c)) to render them hydrophobic. Such surface modified reinforcing fillers are finely divided in that they do not clump and can be homogeneously incorporated into component (a), as the surface treatment makes the fillers easily wetted by gum (a), to generate the uncatalyzed (fluoro)silicone rubber base described herein.

As previously indicated the reinforcing filler is introduced into the gum as hereinbefore described to make an uncatalyzed (fluoro)silicone rubber base containing at least 38 wt. % reinforcing filler based on the weight of the total base starting ingredients, typically 39 to 55 wt. %, alternatively 39 to 50 wt. %, alternatively 39 to 45 wt. % based on the weight of the total base starting ingredients.

### Starting ingredient/component (c)

Given the silica reinforcing filler (b) is naturally hydrophilic, unless it has been pre-treated to render the surface suitably hydrophobic, it is typically treated in situ during the process with a hydrophobing treating agent. Any suitable treating agent able to render the surface of the silica hydrophobic may be utilised. For example, treating agent of starting ingredient/component (c) may be selected from suitable organosilanes, polydiorganosiloxanes, or organosilazanes e.g., hexaalkyl disilazane, short chain siloxane diols and/or short chain fluorosiloxane diols to render the silica reinforcing filler(s) (b) hydrophobic and therefore easier to both handle and obtain a homogeneous mixture with the other ingredients.

Specific examples of component (c) include, but are not restricted to, silanol terminated trifluoropropylmethylsiloxane, silanol terminated vinyl methyl (ViMe) siloxane, silanol terminated methyl phenyl (MePh) siloxane, liquid hydroxyldimethyl-terminated polydiorganosiloxane containing an average from 2 to 20 repeating units of diorganosiloxane in each molecule, hydroxyldimethyl terminated Phenylmethyl Siloxane, hexaorganodisiloxanes, such as hexamethyldisiloxane and divinyltetramethyldisiloxane; hexaorganodisilazanes, such as hexamethyldisilazane (HMDZ), divinyltetramethyldisilazane and tetramethyldi(trifluoropropyl)disilazane; hydroxyldimethyl terminated polydimethylmethylvinyl siloxane, octamethyl cyclotetrasiloxane, and silanes including but not limited to methyltrimethoxysilane, dimethyldimethoxysilane, vinyltrimethoxysilane, methyltriethoxysilane, vinyltriethoxysilane, chlorotrimethyl silane, dichlorodimethyl silane, trichloromethyl silane.

A small amount of water can be added together with the silica treating agent(s) as processing aid. In one embodiment when required starting ingredient/component (c) herein comprises a short chain linear or branched polydiorganosiloxane which is dialkylhydroxy or dialkylalkoxy terminated, which short chain linear or branched polydiorganosiloxane comprise multiple units of the structure:

-((R¹⁰)₂SiO)-,

where each R¹⁰ may be the same or different and is an alkyl group having from 1 to 10 carbons, alternatively an alkyl group having 1 to 6 carbons, alternatively is methyl, ethyl or propyl or is an aromatic group having from 6 to 12 carbons, alternatively phenyl, and the number average degree of polymerization is in a range of between 2 to 50, alternatively 2 to 25. In one embodiment each R¹⁰ is selected from methyl, ethyl, propyl and phenyl. Each terminal alkoxy group, when present, typically has from 1 to 6 carbons but is preferably ethoxy or methoxy. Hence, the short chain linear or branched polydiorganosiloxane may be selected from a dimethylhydroxy terminated polydimethylsiloxane, a dimethylmethoxy terminated polydimethylsiloxane or a dimethylethoxy terminated polydimethylsiloxane where the number average degree of polymerization is from 2 to 25, alternatively from 2 to 20; a dimethylhydroxy terminated polymethylphenylsiloxane a dimethylmethoxy terminated polymethylphenylsiloxane or a dimethylethoxy terminated polymethylphenylsiloxane where the number average degree of polymerization is from 2 to 25, alternatively from 5 to 20, and/or a dimethylhydroxy terminated polydimethylmethylphenylsiloxane copolymer, dimethylmethoxy terminated polydimethylmethylphenylsiloxane copolymer or a dimethylethoxy terminated polydimethylmethylphenylsiloxane copolymer where the number average degree of polymerization is from 2 to 25, alternatively from 2 to 20; for example

HO-((R¹⁰))₂SiO)ₓ-H

Where x is the number average degree of polymerization

Molecular weight values may again be determined by gel permeation chromatography but polymers at the lower end of the range e.g., having a DP of from about 2 to 20 can be analysed by gas chromatography - mass spectroscopy (GC-MS).

The surface treatment of untreated silica reinforcing filler (b) may be undertaken prior to introduction in the composition or in situ (i.e., in the presence of at least a portion of the other ingredients of the composition herein by blending these ingredients together at approximately 25°C or above until the filler is completely treated. Typically, untreated silica reinforcing filler (c) is treated in situ with a treating agent in the presence of component (a) which results in the preparation of an uncatalyzed (fluoro)silicone rubber base as hereinbefore described.

Component (c) may be present in an amount of from 0.1 to 20 wt. % of the total base starting ingredients, alternatively 0.5 to 15, wt. % of the total base starting ingredients, alternatively 1 to 10, wt. % of the total base starting ingredients.

### Optional base Ingredients

Optionally, a small amount of water e.g., up to 3 wt. % of the total base starting ingredients can be added together with component (c) as a processing aid in order to promote hydrolysis and to enhance the treatment effect. This is particularly the case when component (c) is a hexaorganodisilazane such as hexamethyldisilazane (HMDZ).

If desired or deemed required additional silicone polymers, fluorosilicone polymers or copolymers thereof of the structures defined for component (a) may additionally be incorporated into the base during step (i), step (v) or step (i) and step (v) of the process. These may be gums having a Williams plasticity of less than 100 mm/100 and/or may be silicone polymers, fluorosilicone polymers or copolymers thereof having a viscosity of from 10,000mPa.s at 25°C to 500, 000mPa.s at 25°C with the viscosity measured using a Brookfield^{®} rotational viscometer with spindle LV-4 (designed for viscosities in the range between 1,000-2,000,000 mPa.s) and adapting the speed according to the polymer viscosity e.g., 6rpm; and a vinyl content of up to 10% wt. % of each respective polymer. When added the cumulative total amount of such additional silicone polymers, fluorosilicone polymers or copolymers thereof which may be added in step (i), step (v) or step (i) and step (v) is 10 wt. % of the total base starting ingredients, alternatively in an amount up to 7.5 wt. % of the total base starting ingredients, alternatively in an amount up to 5.0 wt. % of the total base starting ingredients.

For the avoidance of doubt the total base starting ingredients are starting ingredients (a), (b), (c) and any additional ingredients which are introduced to form the base composition/mixture.

In the process herein for making uncatalyzed (fluoro)silicone rubber base there are provided the following steps:
(i) Introducing, as a first starting ingredient the one or more silicone polymers, fluorosilicone polymers or copolymers thereof in each instance having a Williams plasticity of at least 100mm/100 in accordance with ASTM D-926-08, into a mixing chamber of a mixer at approximately 25 °C optionally in an inert atmosphere and mixing;
(ii) Gradually introducing, as a second starting ingredient, one or more reinforcing fillers and optionally a third starting ingredient, one or more hydrophobing filler treating agents into the mixing chamber of the mixer whilst continuing mixing until the mixer has been charged with a predetermined amount of reinforcing filler of at least 38 wt. % of the total base starting ingredients to form a base mixture;
(iii) Optionally maintaining the temperature of the base mixture in the mixing chamber within a pre-determined range of from 100 and 200 °C for a period of up to 6 hours to remove volatiles from the step (ii), base mixture, to form a step (iii) base mixture which step (iii), when utilised, may be carried out under vacuum;
(iv) Cooling the resulting step (ii) base mixture or step (iii) base mixture to a temperature between 25 °C and 120 °C; and prior to, during or subsequent to step (iv);
(v) Reducing the wt. % of reinforcing filler in the step (ii) base mixture or step (iii) base mixture to a pre-defined amount by mixing the step (ii) base mixture or step (iii) base mixture with additional one or more silicone polymers, fluorosilicone polymers or copolymers thereof having a Williams plasticity of at least 100mm/100 in accordance with ASTM D-926-08, to form an uncatalyzed (fluoro)silicone rubber base.

Step (v) may take place prior to, during or subsequent to step (iv). Typically, step (v) is undertaken prior to or during step (iv) if required, when a base is being made. When making (fluoro)silicone rubber compound composition as described herein, step (v) above is essential and there is an additional step (vi) which occurs simultaneously with or subsequent to said step (v). Step (vi) being
(vi) Introducing at least one catalyst or vulcanising agent and optionally one or more additives, selected from cross-linkers, cure inhibitors, additional fillers, pigments, property modifiers and the like.

Concentrating on the (fluoro)silicone rubber base manufacture, as previously indicated the mixer utilised for at least steps (i), (ii) and (iii) is a conical screw dump extruder comprising a conical twin screw mixing chamber, said conical twin screw mixing chamber housing two counter-rotating conical screws converging towards an extrusion die having an entrance and an exit wherein passage through said extrusion die is controlled by an occlusion means such that the exit of said extrusion die is adapted to be closed by the occlusion means up to the end of step (iii), (iv) or (v) as required and where appropriate opened subsequent to step the chosen one of steps (iii), (iv) or (v) depending on if or when said uncatalyzed (fluoro)silicone rubber base is to be further processed or stored outside said conical screw dump extruder.

The occlusion means is in the form of a plate which can be moved between an open and a closed position such that in the closed position occlusion means is designed to prevent egress of the content of the conical screw dump extruder during said uncatalyzed (fluoro)silicone rubber base production process and in the open position allowing said uncatalyzed (fluoro)silicone rubber base product to egress through extrusion die. The two intermeshing conical screws operate in a counter-rotative manner and are driven by a motor which forms part of the conical screw dump extruder. The intermeshing conical screws may, if desired, comprise lip seals on the shafts. The conical screw dump extruder may comprise multiple entry ports for e.g., gum, reinforcing filler and treating agent. In each case these ingredients may be stored in any preferred manner prior to introduction into the conical screw dump extruder. They may also be designed so that predetermined amounts thereof may be dosed into the conical screw dump extruder mixing chamber periodically for mixing and preparation of the uncatalyzed (fluoro)silicone rubber base. The starting ingredients for the uncatalyzed (fluoro)silicone rubber base production process may be maintained in an inert atmosphere, typically in a nitrogen atmosphere. Furthermore, the mixing chamber of the conical screw dump extruder may be purged with nitrogen prior to the introduction of the starting ingredients (a), (b) and (c) and during preparation of the uncatalyzed (fluoro)silicone rubber base once the filler has been completely introduced into the mixer. Furthermore, typically conical screw dump extruders have a clamshell style opening design which enables easy cleanout, during use as a conical screw dump extruder if required. It has also been determined that very little or no dumping and scraping is required between preparations of polymer batches due to the small loss of the overall batch weight remaining in the mixer following extrusion (heel). This also has the advantage of reducing the labour intensity of the process and further limits the exposure risk of operators to starting ingredients and by-products involved in the polymerisation process described herein. Additionally, the conical screw dump extruders, may have an integrated vacuum system capability allowing for vacuum to be used during step (iii) the removal of volatiles. An example of such a conical screw dump extruder, is described in US7556419 and US2021113975 both of which are incorporated herein by reference and such conical screw dump extruders are commercially available from Colmec SpA of Busto Arsizio, Italy.

In the process described herein, during mixing the base mixture is driven towards extrusion die by the pair of counter-rotating conical screws, and then forced to go back when the extrusion die is closed by the occlusion means. This means of mixing unexpectedly and surprisingly appears to enable a greater amount of filler to be mixed into the gum than with traditional mixers.

Traditional mixers which have been used to prepare (fluoro)silicone rubber bases such as Banbury type mixers or sigma blade mixers only seem able to incorporate reinforcing silica filler up to a maximum of about 35 wt. % of the total base starting ingredients for making the gum into a base. If any more filler is introduced into said mixers the filler will not be fully incorporated into the gum and the gum/filler mixture will tend to crumble and never mass together. Typically, excess filler would either be extracted through a vent or the like or would remain in powder form in the mixing chamber contributing to the unmassable silicone rubber base.

It is thought, in hindsight, that the maximum of 35 wt. % might be due to the mixing mechanism of e.g., a sigma blade where the material is "grabbed" and pulled into the mixing trough for mixing when initial mixing occurs but this becomes increasingly difficult as the viscosity/Williams plasticity increases and the partially prepared base becomes too stiff to pull remaining into the base composition or the base becomes powdery because of the inability to re-mass as filler loadings increase to a functional saturation level given the mixing mechanisms of the mixers being used. Surprisingly, the process described herein appears to enable a larger proportion of filler to be incorporated into the gum without such problems.

In step (i) of the (fluoro)silicone rubber base manufacturing process the one or more silicone polymers, fluorosilicone polymers or copolymers thereof ((fluoro)silicone gums) in each instance having a Williams plasticity of at least 100mm/100 in accordance with ASTM D-926-08, is/are introduced into the conical twin screw mixing chamber through a suitable inlet.

The (fluoro)silicone gums are generally introduced at approximately 25°C after which said gum is mixed. In use the (fluoro)silicone gum or (fluoro)silicone gums which has/have been introduced into the conical twin screw extruder mixing chamber are driven towards the extrusion die by the counter-rotating screws. However, as the occlusion means is shut, they are forced to move back up the conical twin screw extruder mixing chamber for further recirculation/additional mixing to enhance the homogeneity of the (fluoro)silicone gums. The two counter-rotating screws are in converging and intersecting conical channels, wherein the peripheral profile of the screw threads runs adjacent to the channel surface. The material is thus forced to follow the conical profile of the screw to a progressively narrower volume, increasing the pressure as the (fluoro)silicone gum approaches the closed extrusion die before preparation of the base in step (ii). This may optionally be undertaken in an inert atmosphere. The materials introduced into the conical twin screw extruder gradually get hotter, potentially up to in the region of 200°C during the preparation of the uncatalyzed (fluoro)silicone rubber base shear heating during the (fluoro)silicone rubber base manufacturing process.

The (fluoro)silicone gums introduced into the conical twin screw extruder mixing chamber in step (i) may be introduced in any suitable manner, such as, for the sake of example, from manually or otherwise from any suitable containers or using an automatic-dosing process e.g., an augered, automatic-dosing process from gum hoppers or the like. If mixed under an inert atmosphere, typically the (fluoro)silicone rubber base manufacturing process is undertaken in a nitrogen atmosphere.

In cases where two or more (fluoro)silicone gums (a) are being used these may be pre-mixed in a suitable mixer before entry into the conical twin screw extruder if desired, such that the different (fluoro)silicone gums (a) are thoroughly inter-mixed when introduced into the conical twin screw extruder. Alternatively, when more than one (fluoro)silicone gum (a) is being utilised the respective (fluoro)silicone gums (a) may be introduced into the conical screw dump extruder either simultaneously or through any other suitable mixing regime, such as having one (fluoro)silicone gum (a) introduced at the start of the (fluoro)silicone rubber base manufacturing process and introducing aliquots of a second (fluoro)silicone gum (a) periodically during the (fluoro)silicone rubber base manufacturing process or introducing an amount of the first (fluoro)silicone gum (a) followed by an amount of the second (fluoro)silicone gum (a) and repeating if appropriate. These gums can then be thoroughly mixed together in the conical twin screw extruder prior to the introduction of reinforcing filler (b) and treating agent (c), if in the latter case it is required in order to prepare the uncatalyzed (fluoro)silicone rubber base.

In step (ii) of the (fluoro)silicone rubber base manufacturing process one or more reinforcing fillers and optionally one or more hydrophobing filler treating agents are gradually introduced into the conical twin screw extruder whilst continuing mixing until the mixer has been charged with a predetermined amount of reinforcing filler of at least 38 wt. % based on the weight of the total base starting ingredients, typically 39 to 55 wt. %, alternatively 39 to 50 wt. %, alternatively 39 to 45 wt. % based on the weight of the total base starting ingredients; to form a base mixture. The reinforcing filler (b) may be introduced into the conical twin screw extruder via any suitable powder dosing means compatible therewith. For example, it may be dosed via one or more hoppers or even manually from bags or the like. Treating agent (c), when required, may be dosed using any suitable means, e.g., automatically from tanks but may alternatively be fed manually as and when desired. Typically, when treating agent (c) is required, as is expected in most instances, the reinforcing filler (b) and treating agent (c) may be introduced into the conical twin screw extruder in any order, i.e., one before the other or simultaneously. They may both be introduced gradually at a predetermined rate or periodically during the mixing process, if desired. The mixing of step (ii) of the (fluoro)silicone rubber base manufacturing process may be also undertaken in a nitrogen atmosphere, e.g., by use of periodic introductions of nitrogen in order to control oxygen levels in the mixer during mixing.

In step (ii) of the (fluoro)silicone rubber base manufacturing process the conical screw dump extruder is utilised to introduce reinforcing filler (b) into the (fluoro)silicone gum(s)(a) and to treat said reinforcing fillers (b) in situ with treating agent (c) to render the outer surface of the reinforcing fillers hydrophobic and therefore more easily wetted by and introduced into the(fluoro)silicone gum(s)(a).

In use, assuming treating agent (c) is required, components (b) and (c) are introduced into the conical screw dump extruder already containing component (a). The ingredients for preparing the base, i.e., components (a), (b) and (c) are then mixed in the same manner as described previously with respect to step (i), i.e., in the conical screw dump extruder mixing chamber they are driven towards the extrusion die by the counter-rotating screws with the occlusion means shut so that they are forced to move back up the conical twin screw mixing chamber for further recirculation/additional mixing to enhance the homogeneity of the uncatalyzed (fluoro)silicone rubber base as it is prepared. The two counter-rotating screws are in converging and intersecting conical channels, wherein the peripheral profile of the screw threads run adjacent to the channel surface. The material is thus forced to follow the conical profile of the screw to a progressively narrower volume, increasing the pressure as the ingredients and/or uncatalyzed (fluoro)silicone rubber base product approach the closed extrusion die during the uncatalyzed (fluoro)silicone rubber base production process. This increase in pressure enables the recirculation of the contents of the mixing chamber. If desired, e.g., perhaps when the uncatalyzed (fluoro)silicone rubber base production process is considered close to completion, the rotation of the two screws may be also temporarily reversed to assist the mixing or cooling processes. Polytetrafluoroethylene (PTFE) packing may be utilised on the shafts of the conical screws and in one embodiment if desired said screws may comprise lip seals on the shafts of said screws. Typically step (ii) of the (fluoro)silicone rubber base manufacturing process is carried out at a temperature of from about 50°C and 120°C, alternatively from about 50°C and 100°C, alternatively from about 50°C and 80°C usually dependent on the hydrophobing agent (c) being utilised. Whilst chain extension is not often utilised when making bases from (fluoro)silicone gums, if for any reason chain extension is required it is usually undertaken during step (ii) and as such, if required chain extenders may be added into the conical screw dump extruder during step (ii) of the process to enable chain extension to take place during step (ii) and/or step (iii) of the process for making the base.

In step (iii) of the (fluoro)silicone rubber base manufacturing process the temperature of the mixing chamber is optionally maintained within a pre-determined range of from 100 and 200°C for a period of up to 6 hours to remove volatiles and to thermodynamically encourage silica treatment. When utilised step (iii) may be carried out under vacuum and heating may be required if/when heat generated during shear mixing in step (ii) does not generate sufficient heat to ensure the temperature is maintained in step (iii) within the desired range whilst the volatiles are removed. Volatiles generated during step (ii) of the (fluoro)silicone rubber base manufacturing process are removed whilst mixing can continue. Dependent on the volatiles envisaged to be present because of the ingredients used, in particular dependent on the treating agent (c) being used, when required, the conical twin screw extruder mixing chamber is maintained at a suitable temperature i.e., within a pre-determined range of from 100 and 200°C for a period of up to 6 hours to remove volatiles as and when required.

In step (iv) of the (fluoro)silicone rubber base manufacturing process the resulting base mixture of steps (ii) and optional (iii) is cooled to a temperature between 25°C and 120°C thereby providing an uncatalyzed (fluoro)silicone rubber base comprising at least 38 wt. % reinforcing filler which maybe further processed or stored. The temperature to which the uncatalyzed (fluoro)silicone rubber base needs to be cooled depends on whether it is to be used for further processing, i.e., compounding where catalysts and optional additives are introduced or whether the uncatalyzed (fluoro)silicone rubber base is to be stored e.g., packaged for future use or sale.

Hence, for example, if the uncatalyzed (fluoro)silicone rubber base is to be stored and/or packaged, cooling needs to be down to a temperature low enough to prevent melting of the packaging material e.g., in the case of polyethylene it has to be cooled to a temperature of no more than 90°C, for example it may be cooled to a pre-defined temperature of from about 30°C and 80°C, alternatively from about 30°C and 70°C alternatively from about 40°C and 70°C. Cooling step (iv) of the (fluoro)silicone rubber base manufacturing process may for example, take place:
(I) completely in the conical screw dump extruder used to make the uncatalyzed (fluoro)silicone rubber base in which case the resulting uncatalyzed (fluoro)silicone rubber base is extruded cold at a temperature in the region of 30 to 40°C;
(II) partially in the conical screw dump extruder used to make the uncatalyzed (fluoro)silicone rubber base in which case the resulting uncatalyzed (fluoro)silicone rubber base is extruded at a moderate temperature in the region of 50 to 80°C and is then transferred to an alternative means for cooling further e.g., a pan or other container; or
(III) completely outside of the conical screw dump extruder used to make the uncatalyzed (fluoro)silicone rubber base in which case the resulting uncatalyzed (fluoro)silicone rubber base is extruded "hot" at a temperature of from 80°C to 120°C, alternatively at a temperature of from 90°C to 120°C and then being transferred to an alternative means for cooling e.g., a second "cooling" conical screw dump extruder, a pan or other container in which case the conical screw dump extruder used to make the uncatalyzed (fluoro)silicone rubber base may be re-used to make a further batch of uncatalyzed (fluoro)silicone rubber base from components (a), (b) and (c) without delay.

If the conical screw dump extruder used to make the uncatalyzed (fluoro)silicone rubber base was also used to cool the base to approximately 25°C it could potentially increase costs and time and would reduce output in the plant and as such options (iv)(II) and (iv)(III) are consequently preferred. Step (v) which is optional may take place prior to, during or subsequent to step (iv). Typically, step (v) is undertaken prior to or during step (iv) if required, when a base is being made.

If desired after step (iv) or (v), the resulting step (iv) or step (v) product may be pelletised or dusted with a suitable powder prior to storage to ease future use, e.g., as the main ingredient in a compounding process. Any suitable process may be used to pelletise said product and this resulting pelletised product may be considered to be a preferred means of storage before being used in compounding. Equally or alternatively, the base composition may be dusted with a suitable powder such as a talcum powder to ease future use after storage.

However, in one embodiment the conical screw dump extruder used to make the uncatalyzed (fluoro)silicone rubber base may be used for making the uncatalyzed (fluoro)silicone rubber base and then step (iv)(I) can be utilised so that it can also be a means of compounding the cooled uncatalyzed (fluoro)silicone rubber base in said conical screw dump extruder with other additives before extrusion thereof. In such a case, the occlusion means is maintained in the closed position during the uncatalyzed (fluoro)silicone rubber base production process, e.g., steps (i) to (iii) above and this step (iv) as well as for step (v) and step (vi) discussed above for compounding. Subsequently, once the uncatalyzed (fluoro)silicone rubber base step (iii) product has cooled to the desired temperature in order to be despatched from the conical screw dump extruder used to make the uncatalyzed (fluoro)silicone rubber base, the occlusion means is moved to the open position to allow the resulting uncatalyzed (fluoro)silicone rubber base product to be extruded through the extrusion die. The extrusion die has an entrance and an exit wherein passage through the extrusion die from the entrance in the conical screw dump extruder to the exit is controlled by the aforementioned occlusion means.

The uncatalyzed (fluoro)silicone rubber base product issuing out of the conical screw dump extruder through the extrusion die is collected for further cooling and/or step (v) or is collected and transferred to a suitable packaging means or is transported to a compounding means to undergo step (v) and (vi) described above to make i.e., a curable rubber compound composition or the like. In the case of further cooling, it could be extruded into a bulk tub or other container, or it could be run straight through a gear pump and then packaged.

In one embodiment the base issuing from the conical screw dump extruder is extruded into another apparatus for further processing such as step (v) and optionally step (vi) as described above using a further conical screw dump extruder with a gear pump or a tapered twin screw extruder where it can be strained and packaged or alternatively using any suitable compounding means such as a sigma blade kneader mixer, a bottom discharge kneader mixer, a conical screw dump extruder, a planetary extruder, a co-kneader extruder, a twin-screw extruder, a single screw extruder and/or a two-roll mill but may in this instance in one preferred embodiment be a second conical screw dump extruder.

In one embodiment, the process for the preparation of an uncatalyzed (fluoro)silicone rubber base forms part of a continuous compounding process, for example there may be a cascade of conical screw dump extruders used in that a first conical screw dump extruder may be used for the preparation of silicone rubber gum such as described in WO2023219834, a second conical screw dump extruder may be utilised for making uncatalyzed (fluoro)silicone rubber base as described above, a third conical screw dump extruder may be utilised at least partially for cooling step (iv) and subsequently for packaging and alternatively partially for cooling step (iv) and steps (v) and optionally (vi) or the third conical screw dump extruder can extrude cooled uncatalyzed (fluoro)silicone rubber base into a fourth conical screw dump extruder which can be utilised for step (v) and step (vi) with catalysts and other additives to form a curable silicone rubber compound composition.

Typically, when compounding the uncatalyzed (fluoro)silicone rubber base as described above, step (v) is first undertaken wherein additional amounts of (fluoro)silicone gum are introduced and mixed in with the resulting product of step (iv). The amount of additional (fluoro)silicone gum will be predetermined to ensure that the right level of filler is present in the final compound composition resulting from step (vi). If desired one or more of the organopolysiloxane polymers identified as additional base ingredients above may additionally introduced during step (v). Hence, such optional ingredients when present are introduced into the base typically during step (i), (ii) or (v), alternatively during step (i) or (v). If appropriate step (v) may be carried out and then the product of step (v) may be packaged and stored so that step (vi) can be undertaken later in house or by a third party. Alternatively, step (vi) may be carried out simultaneously with step (v) or subsequent to step (v) with the product of step (v).

Catalysts, cross-linkers, when required as well as the optional additives are ideally all dosed, depending on the apparatus utilised, but some small volume additives may be introduced manually if desired although typically this is not preferred.

The compounding of the uncatalyzed (fluoro)silicone rubber base, after cooling step (iv), has to be carried out at a temperature below the curing temperature of the catalyst, typically peroxide which is generally one of the additives used in compounding. Hence compounding preferably is undertaken at a temperature of less than 50°C for most peroxides but can be undertaken at a temperature up to about 120°C for some catalysts.

The compounding means used in step (vi) may be any suitable compounder type mixer for example a sigma blade kneader mixer, a bottom discharge kneader mixer, a conical twin mixer e.g., screw dump extruder, a planetary extruder, a co-kneader extruder, a twin-screw extruder, a single screw extruder and/or a two-roll mill but may, in one preferred embodiment, be a second conical screw dump extruder.

Once the process above is complete the resulting uncatalyzed (fluoro)silicone rubber base can either be stored for future use or may be utilised to make curable compound composition by introducing catalysts, cross-linkers and the like into said base.

Firstly, the uncatalyzed (fluoro)silicone rubber base may be diluted by introducing additional amounts of one or more (fluoro)silicone gum(s) as defined a component (a) above, optionally with one or more of the organopolysiloxane polymers identified as additional base ingredients in order to reduce the filler content in the uncatalyzed (fluoro)silicone rubber base Before introducing other additives. Any suitable amount of (fluoro)silicone gum(s) may be introduced as and when required. Indeed, the uncatalyzed (fluoro)silicone rubber base may, if desired, be diluted by a different (fluoro)silicone gum(s) than originally utilised to make the uncatalyzed (fluoro)silicone rubber base. Typically, when utilising uncatalyzed (fluoro)silicone rubber base made from silicone gums and/or fluorosilicone polymer gums the favoured catalysts used are suitable organic peroxides or a selection thereof. Suitable organic peroxides include substituted or unsubstituted dialkyl-, alkylaroyl-, diaroyl-peroxides, e.g., benzoyl peroxide and 2,4-dichlorobenzoyl peroxide, ditertiarybutyl peroxide, dicumyl peroxide, t- butyl cumyl peroxide, bis(tert-butyldioxy)diisopropylbenzene bis(t-butylperoxy)-2,5-dimethyl hexyne 2,4-dimethyl-2,5-di(t-butylperoxy) hexane, di-t-butyl peroxide and 2,5-bis(tert-butyl peroxy)-2,5-dimethylhexane. Mixtures of the above may also be used.

Typically, the amount of free radical curative utilised in a high consistency rubber composition as described herein is from 0.2 to 3 wt. %, alternatively 0.2 to 2 wt. % in each case based on the weight of the composition.

Alternatively, but less favoured for such base materials, are hydrosilylation cure (otherwise known as addition cure) packages comprising
(i) A cross-linker in the form of an organosilicon compound having at least two, alternatively at least three Si-H groups per molecule; and
(ii) a hydrosilylation catalyst comprising or consisting of a platinum group metal or a compound thereof;

Organosilicon compound (i) functions as a cross-linker and is provided in the form of an organosilicon compound having at least two, alternatively at least three Si-H groups per molecule. Organosilicon compound (i) of the liquid silicone rubber composition normally contains three or more silicon-bonded hydrogen atoms so that the hydrogen atoms can react with the unsaturated alkenyl and/or alkynyl groups of component (a) to form a network structure therewith and thereby cure the composition. Some or all of Organosilicon compound (i) may alternatively have two silicon bonded hydrogen atoms per molecule when polymer (a) has greater than two unsaturated groups per molecule.

The molecular configuration of the organosilicon compound having at least two, alternatively at least three Si-H groups per molecule (Organosilicon compound (i)) is not specifically restricted. It may be a polyorganosiloxane which can have a straight chain, be branched (a straight chain with some branching through the presence of T groups), cyclic or be a silicone resin based.

While the molecular weight of organosilicon compound (i) is not specifically restricted, the viscosity is typically from 5 to 50,000 mPa.s at 25°C using the test methodology as described for component (a).

Silicon-bonded organic groups used in organosilicon compound (i) may be exemplified by alkyl groups such as methyl, ethyl, propyl, n-butyl, t-butyl, pentyl, hexyl; aryl groups such as phenyl tolyl, xylyl, or similar aryl groups; 3-chloropropyl, 3,3,3-trifluoropropyl, or similar halogenated alkyl group, preferred alkyl groups having from 1 to 6 carbons, especially methyl ethyl or propyl groups or phenyl groups. Preferably the silicon-bonded organic groups used in organosilicon compound (i) are alkyl groups, alternatively methyl, ethyl or propyl groups.

Examples of the organosilicon compound having at least two, alternatively at least three Si-H groups per molecule of organosilicon compound (i) include but are not limited to:
(a') trimethylsiloxy-terminated methylhydrogenpolysiloxane,
(b') trimethylsiloxy-terminated polydimethylsiloxane-methylhydrogensiloxane,
(c') dimethylhydrogensiloxy-terminated dimethylsiloxane-methylhydrogensiloxane copolymers,
(d') dimethylsiloxane-methylhydrogensiloxane cyclic copolymers,
(e') copolymers and/or silicon resins consisting of (CH₃)₂HSiO_{1/2} units, (CH₃)₃SiO_{1/2} units and SiO_{4/2} units,
(f) copolymers and/or silicone resins consisting of (CH₃)₂HSiO_{1/2} units and SiO_{4/2} units,
(g') Methylhydrogensiloxane cyclic homopolymers having between 3 and 10 silicon atoms per molecule;
alternatively, organosilicon compound (i), the cross-linker, may be a filler, e.g., silica treated with one of the above, and mixtures thereof.

In one embodiment, the organosilicon compound (i) is selected from a methylhydrogenpolysiloxane capped at both molecular terminals with trimethylsiloxy groups; a copolymer of a methylhydrogensiloxane and a dimethylsiloxane capped at both molecular terminals with trimethylsiloxy groups; dimethylsiloxane capped at both molecular terminals with dimethylhydrogensiloxy groups; a copolymer of a methylhydrogensiloxane and a dimethylsiloxane capped at both molecular terminals with dimethylhydrogensiloxy groups.

The cross-linker organosilicon compound (i) is generally present in the compound composition in an amount such that the molar ratio of the total number of the silicon-bonded hydrogen atoms in organosilicon compound (i) to the total number of alkenyl and/or alkynyl groups in component (a) is from 0.5:1 to 10:1. When this ratio is less than 0.5:1, a well-cured elastomeric material will not be obtained. When the ratio exceeds 10:1, there is a tendency for the hardness of the cured elastomeric material to increase when heated. Preferably organosilicon compound (i) is in an amount such that the molar ratio of silicon-bonded hydrogen atoms of organosilicon compound (i) to alkenyl/alkynyl groups, alternatively alkenyl groups of component (a) ranges from 0.7 : 1.0 to a maximum of 5.0 : 1.0, alternatively from 0.9 : 1.0 to 2.5 : 1.0, and further alternatively from 0.9 : 1.0 to 2.0 : 1.0.

The silicon-bonded hydrogen (Si-H) content of organosilicon compound (i) is determined using quantitative infra-red analysis in accordance with ASTM E168. In the present instance the silicon-bonded hydrogen to alkenyl (vinyl) and/or alkynyl ratio is important when relying on a hydrosilylation cure process. Generally, this is determined by calculating the total weight % of alkenyl groups in the composition, e.g., vinyl [V] and the total weight % of silicon bonded hydrogen [H] in the composition and given the molecular weight of hydrogen is 1 and of vinyl is 27 the molar ratio of silicon bonded hydrogen to vinyl is 27[H]/[V].

Typically, dependent on the number of unsaturated groups in component (a) and the optional base additives as well as the number of Si-H groups in organosilicon compound (i), organosilicon compound (i) will be present in an amount of from 0.1 to 10 wt. % of the compound composition, alternatively 0.1 to 7.5wt. % of the compound composition, alternatively 0.5 to 7.5wt. %, further alternatively from 0.5% to 5 wt. % of the compound composition.

Hydrosilylation catalyst (ii) comprises or consists of a platinum group metal or a compound thereof. These are usually selected from catalysts of the platinum group of metals (platinum, ruthenium, osmium, rhodium, iridium and palladium), or a compound of one or more of such metals. Alternatively, platinum and rhodium compounds are preferred due to the high activity level of these catalysts in hydrosilylation reactions, with platinum compounds most preferred. In a hydrosilylation (or addition) reaction hydrosilylation catalyst (ii) herein catalyses the reaction between an unsaturated group, usually an alkenyl group e.g., vinyl with Si-H groups.

The hydrosilylation catalyst (ii) can be a platinum group metal, a platinum group metal deposited on a carrier, such as activated carbon, metal oxides, such as aluminum oxide or silicon dioxide, silica gel or powdered charcoal, or a compound or complex of a platinum group metal. Preferably the platinum group metal is platinum.

Examples of preferred hydrosilylation catalysts (ii) are platinum based catalysts, for example, platinum black, platinum oxide (Adams catalyst), platinum on various solid supports, chloroplatinic acids, e.g., hexachloroplatinic acid (Pt oxidation state IV) (Speier catalyst), chloroplatinic acid in solutions of alcohols e.g., isooctanol or amyl alcohol (Lamoreaux catalyst), and complexes of chloroplatinic acid with ethylenically unsaturated compounds such as olefins and organosiloxanes containing ethylenically unsaturated silicon-bonded hydrocarbon groups, e.g., tetra-vinyl-tetramethylcyclotetrasiloxane-platinum complex (Ashby catalyst). Soluble platinum compounds that can be used include, for example, the platinum-olefin complexes of the formulae (PtCl₂.(olefin)₂ and H(PtCl₃.olefin), preference being given in this context to the use of alkenes having 2 to 8 carbon atoms, such as ethylene, propylene, isomers of butene and of octene, or cycloalkanes having 5 to 7 carbon atoms, such as cyclopentene, cyclohexene, and cycloheptene. Other soluble platinum catalysts are, for the sake of example a platinum-cyclopropane complex of the formula (PtCl₂C₃H₆)₂, the reaction products of hexachloroplatinic acid with alcohols, ethers, and aldehydes or mixtures thereof, or the reaction product of hexachloroplatinic acid and/or its conversion products with vinyl-containing siloxanes such as methylvinylcyclotetrasiloxane in the presence of sodium bicarbonate in ethanolic solution. Platinum catalysts with phosphorus and amine ligands can be used as well, e.g., (Ph₃P)₂PtCl₂; and complexes of platinum with vinylsiloxanes, such as symdivinyltetramethyldisiloxane.

Hence, specific examples of suitable platinum-based catalysts include:
(i) complexes of chloroplatinic acid with organosiloxanes containing ethylenically unsaturated hydrocarbon groups are described in US 3,419,593;
(ii) chloroplatinic acid, either in hexahydrate form or anhydrous form;
(iii) a platinum-containing catalyst which is obtained by a method comprising reacting chloroplatinic acid with an aliphatically unsaturated organosilicon compound, such as divinyltetramethyldisiloxane;
(iv) alkene-platinum-silyl complexes as described in US Pat. No. 6,605,734 such as (COD)Pt(SiMeCl₂)₂ where "COD" is 1,5-cyclooctadiene; and/or
(v) Karstedt's catalyst, a platinum divinyl tetramethyl disiloxane complex typically containing about 1 wt. % of platinum typically in a vinyl siloxane polymer with a viscosity of from about 200 to 750 using the test methodology as described for component (a).

Solvents such as toluene and the like organic solvents have been used historically as alternatives but the use of vinyl siloxane polymers by far the preferred choice. These are described in US3,715,334 and US3,814,730. In one preferred embodiment hydrosilylation catalyst (ii) may be selected from coordination compounds of platinum. In one embodiment hexachloroplatinic acid and its conversion products with vinyl-containing siloxanes, Karstedt's catalysts and Speier catalysts are preferred. Hydrosilylation catalyst (ii) is typically present in a quantity of platinum atom that provides from 0.1 to 500ppm (parts per million) with respect to the weight of the reactive ingredients, components (a) and (c1(ii)). The catalyst may be added as a single species or as a mixture of two or more different species. Typically, dependent on the form/concentration in which the hydrosilylation catalyst (ii) is provided the amount of catalyst present will be within the range of from 0.05-1.5 wt. % of the composition, alternatively from 0.05-1.0 wt. %, alternatively from 0.1-1.0 wt. %, alternatively 0.1 to 0.5 wt. %, of the composition, wherein the platinum catalyst is provided in a masterbatch of polymer such as (a) described above.

A wide variety of other additives can be added into the uncatalyzed (fluoro)silicone rubber base during the compounding process.

### Optional Additives

In each case, a variety of optional additives to suit the application for which the elastomer resulting from cure is to be used may also be incorporated into the composition. Examples include cure inhibitors (typically when a hydrosilylation cure package is incorporated), mold releasing agents, extending fillers, adhesion catalysts, rheology modifiers, electrically conductive fillers, thermally conductive fillers, pot life extenders, acid acceptors, lubricants, heat stabilisers, compression set additives, UV light stabilizers, bactericides, wetting agents, pigments and colorants, flame retardants, and plasticizers or the like.

### Cure Inhibitors

Cure inhibitors are used, when required, i.e., in cases where a hydrosilylation (addition) cure system is being utilised rather than a peroxide. They are utilised to prevent or delay the addition-reaction curing process especially during storage. The optional addition-reaction inhibitors of platinum-based catalysts are well known in the art and include hydrazines, triazoles, phosphines, mercaptans, organic nitrogen compounds, acetylenic alcohols, silylated acetylenic alcohols, maleates, fumarates, ethylenically or aromatically unsaturated amides, ethylenically unsaturated isocyanates, olefinic siloxanes, unsaturated hydrocarbon monoesters and diesters, conjugated ene-ynes, hydroperoxides, nitriles, and diaziridines. Alkenyl-substituted siloxanes as described in US3989667 may be used, of which cyclic methylvinylsiloxanes are preferred.

One class of known hydrosilylation reaction inhibitors are the acetylenic compounds disclosed in US3445420. Acetylenic alcohols such as 2-methyl-3-butyn-2-ol constitute a preferred class of inhibitors that will suppress the activity of a platinum-containing catalyst at 25 °C. Compositions containing these inhibitors typically require heating at temperature of 70 °C or above to cure at a practical rate.

Examples of acetylenic alcohols and their derivatives include 1-ethynyl-1-cyclohexanol (ETCH), 2-methyl-3-butyn-2-ol, 3-butyn-1-ol, 3-butyn-2-ol, propargyl alcohol, 1-phenyl-2-propyn-1-ol, 3,5-dimethyl-1-hexyn-3-ol, 1-ethynylcyclopentanol, 3-methyl-1-penten-4-yn-3-ol, and mixtures thereof. Derivatives of acetylenic alcohol may include those compounds having at least one silicon atom. When present, inhibitor concentrations as low as 1 mole of inhibitor per mole of the metal of catalyst will in some instances impart satisfactory storage stability and cure rate. In other instances, inhibitor concentrations of up to 500 moles of inhibitor per mole of the metal of catalyst are required. The optimum concentration for a given inhibitor in a given composition is readily determined by routine experimentation. Dependent on the concentration and form in which the inhibitor selected is provided/available commercially, when present in the composition, the inhibitor is typically present in an amount of from 0.0125 to 10% by weight of the composition.

In one embodiment the inhibitor when present is selected from 1-ethynyl-1-cyclohexanol (ETCH) and/or 2-methyl-3-butyn-2-ol and is present in an amount of greater than zero to 0.1 % by weight of the composition.

### Mold release agent

Any suitable mold release agent may be utilised. It may, for example, be a hydroxydimethyl terminated polydimethylsiloxane having viscosity of from 10 to 200 mPa.s at 25°C measured using a Brookfield^{™} rotational viscometer with a cone plate arrangement with cone CP-52 at 12rpm.

### Extending fillers

Extending fillers may include such as crushed quartz, diatomaceous earths, barium sulphate, iron oxide, titanium dioxide and carbon black, talc, wollastonite. Other fillers which might be used alone or in addition to the above include aluminite, calcium sulphate (anhydrite), gypsum, calcium sulphate, clays such as kaolin, aluminium trihydroxide, graphite, copper carbonate, e.g., malachite, nickel carbonate, e.g., zarachite, barium carbonate, e.g., witherite and/or strontium carbonate e.g., strontianite.

Other extending fillers may include, aluminium oxide, silicates from the group consisting of olivine group; garnet group; aluminosilicates; ring silicates; chain silicates; and sheet silicates. The olivine group comprises silicate minerals, such as but not limited to, forsterite and Mg₂SiO₄. The garnet group comprises ground silicate minerals, such as but not limited to, pyrope; Mg₃Al₂Si₃O₁₂; grossular; and Ca₂Al₂Si₃O₁₂. Aluminosilicates comprise ground silicate minerals, such as but not limited to, sillimanite; Al₂SiO₅; mullite; 3Al₂O₃.2SiO₂; kyanite; and Al₂SiO₅. Ring silicates may be utilised as extending fillers, these include silicate minerals, such as but not limited to, cordierite and Al₃(Mg,Fe)₂[Si₄AlO₁₈]. The chain silicates group comprises ground silicate minerals, such as but not limited to, wollastonite and Ca[SiO₃]. Sheet silicates may alternatively or additionally be used as extending fillers where appropriate group comprises silicate minerals, such as but not limited to, mica; K₂AI₁₄[Si₆Al₂O₂₀](OH)₄; pyrophyllite; Al₄[Si₈O₂₀](OH)₄; talc; Mg₆[Si₈O₂₀](OH)₄; serpentine for example, asbestos; Kaolinite; Al₄[Si₄O₁₀](OH)₈; and vermiculite.

### Adhesion promoters

The composition may also include one or more adhesion promoters selected from one or more monoacrylates, diacrylates or methacrylates; epoxy-containing alkoxysilanes, amine-containing alkoxysilanes, alkoxysilane containing methacrylic groups or acrylic groups and a mixture and/or reaction product of
i) one or more alkoxysilanes having an epoxy group in the molecule;
ii) a linear organopolysiloxane oligomer containing at least one alkenyl group and at least one hydroxy or alkoxy group per molecule; and
iii) an organometallic condensation reaction catalyst comprising organoaluminum or organozirconium compounds; or a mixture thereof;

### Rheology modifiers

The composition may also include a rheology modifier such as polytetrafluoroethylene (PTFE).

### Pigments and other colourants

Examples of pigments include titanium dioxide, chromium oxide, bismuth vanadium oxide, iron oxides and mixtures thereof.

Examples of colouring agents for which may be utilised in the hydrosilylation curable silicone coating composition include pigments, vat dyes, reactive dyes, acid dyes, chrome dyes, disperse dyes, cationic dyes and mixtures thereof. The two-part moisture cure organopolysiloxane composition as described herein may further comprise one or more pigments and/or colorants which may be added if desired. The pigments and/or colorants may be coloured, white, black, metal effect, and luminescent e.g., fluorescent and phosphorescent. Pigments are utilized to colour the composition as required. Any suitable pigment may be utilized providing it is compatible with the composition herein. In two-part moisture cure organopolysiloxane compositions pigments and/or coloured (non-white) fillers e.g., carbon black may be utilized in the catalyst package to colour the end sealant product.

Suitable white pigments and/or colorants include titanium dioxide, zinc oxide, lead oxide, zinc sulfide, lithophone, zirconium oxide, and antimony oxide.

Suitable non-white inorganic pigments and/or colorants include, but are not limited to, iron oxide pigments such as goethite, lepidocrocite, hematite, maghemite, and magnetite black iron oxide, yellow iron oxide, brown iron oxide, and red iron oxide; blue iron pigments; chromium oxide pigments; cadmium pigments such as cadmium yellow, cadmium red, and cadmium cinnabar; bismuth pigments such as bismuth vanadate and bismuth vanadate molybdate; mixed metal oxide pigments such as cobalt titanate green; chromate and molybdate pigments such as chromium yellow, molybdate red, and molybdate orange; ultramarine pigments; cobalt oxide pigments; nickel antimony titanates; lead chrome; carbon black; lampblack, and metal effect pigments such as aluminium, copper, copper oxide, bronze, stainless steel, nickel, zinc, and brass.

Suitable organic non-white pigments and/or colorants include phthalocyanine pigments, e.g., phthalocyanine blue and phthalocyanine green; monoarylide yellow, diarylide yellow, benzimidazolone yellow, heterocyclic yellow, DAN orange, quinacridone pigments, e.g., quinacridone magenta and quinacridone violet; organic reds, including metallized azo reds and nonmetallized azo reds and other azo pigments, monoazo pigments, diazo pigments, azo pigment lakes, β-naphthol pigments, naphthol AS pigments, benzimidazolone pigments, diazo condensation pigment, isoindolinone, and isoindoline pigments, polycyclic pigments, perylene and perinone pigments, thioindigo pigments, anthrapyrimidone pigments, flavanthrone pigments, anthanthrone pigments, dioxazine pigments, triarylcarbonium pigments, quinophthalone pigments, and diketopyrrolo pyrrole pigments.

Typically, the pigments and/or colorants, when particulates, have average particle diameters in the range of from 10 nm to 50 µm, preferably in the range of from 40 nm to 2 µm.

### Lubricants

Typically, if present lubricants which can be added into the compound composition include polyphenylmethylsiloxanes and copolymers thereof such as trimethylsilyl terminated phenylmethylsiloxane dimethylsiloxane copolymers having a viscosity of from 100mPa.s to 200mPa.s at 25°C using a Brookfield^{™} rotational viscometer with a cone plate arrangement with cone CP-52 at 12rpm and mixtures or derivatives thereof. Examples of other lubricants which might be alternatively or additionally utilised include tetrafluoroethylene, resin powder, graphite, fluorinated graphite, talc, boron nitride, fluorine oil, molybdenum disulfide, and mixtures or derivatives thereof. When present such lubricants may be present in an amount of from 1 to 7 wt. % of the composition.

### Heat Stabilisers

The composition herein may also comprise one or more inorganic heat stabilizers, such as hydrated cerium oxide, cerium hydroxide, cerium carboxylates and/or cerium esters, e.g., cerium ethylhexanoate, hydrated aluminum oxide, red iron oxide, yellow iron oxide, carbon black, graphite and zinc oxide used alone or in combination.

### Metal Deactivators

The composition may incorporate one or more metal deactivators selected from a diacylhydrazide-based compound, an aminotriazole-based compound, and an amino-containing triazine-based compound. Commercially produced compounds of the aforementioned include, for the sake of example are N,N'-bis -[3-(3,5-di-t-butyl-4-hydroxyphenyl) propionyl] hydrazine), sold as Irganox^{™} MD1024 from BASF, dodecanedioyl-di-(N'-salicyloyl)hydrazine, a synonym for which is 1-N',12-N'-bis(2-hydroxybenzoyl)dodecanedihydrazide, which is sold commercially as ADK STAB^{™} CDA-6 from Adeka Corporation; N'1,N'12-Bis(2-hydroxybenzoyl)dodecanedihydrazide which is sold commercially as ADK STAB^{™} CDA-6S from Adeka Corporation, and N,N'-Bis[3-(3,5-di-tert-butyl-4-hydroxyphenyl)propionyl]hydrazine which is sold commercially as ADK STAB^{™} CDA-10 From Adeka Corporation and N,N'-bis-3-(3,5-di-tert-butyl-4-hydroxyphenyl) propionylhexamethylenediamine which is sold commercially as ANTAGE HP-300 from Kawaguchi Chemical Industry. They may also include An example of a commercially produced compound of this type is 3- (n-Salicyloyl)Amino-1,2,4-Triazole (a synonym for which is 2-Hydroxy-N-1H-1,2,4-triazol-3-ylbenzamide) which is sold commercially as ADK STAB^{™} CDA-1 and in a blend as ADK STAB^{™} CDA-1M from Adeka Corporation or Adekastab^{™} ZS-27 from Adeka Corporation the main component of which is understood to be 2,4,6-triamino-1,3,5-triazine.

Prior to use the chosen organocyclosiloxane oligomer(s) are either stored in suitable storage containers or are supplied direct from being manufactured. If the chosen organocyclosiloxane oligomer(s) are supplied to the storage containers stored direct from being manufactured for immediate use or in said storage containers for immediate use or if the chosen organocyclosiloxane Any of the above listed optional additives can be introduced into the base if desired but this is not usually undertaken. They are usually introduced into the base during the compounding process along with the catalysts and in the case of hydrosilylation cure cross-linker. The catalysts and cross-linker are not added during the preparation of the base herein.

In one embodiment, if desired, after step (iv) or (v) the resulting step (iv) or step (v) product may be pelletised or dusted with a suitable powder prior to storage.

In another embodiment the process for the preparation of an uncatalyzed (fluoro)silicone rubber base forms part of a continuous compounding process.

### Examples

There follows a series of examples.

In each of Ex. 1 and comparatives 1 to 3 (Comp. 1 to 3) it was attempted to prepare a series of uncatalyzed fluorosilicone rubber bases. In Ex. 1 a fluorosilicone rubber base was prepared in accordance with the process for the preparation of an uncatalyzed (fluoro)silicone rubber base described herein using a Colmec^{™} CTM-65 mixer as the conical screw dump extruder. A dimethylhydroxy terminated polytrifluoropropylmethyl methylvinylsiloxane gum having a Williams plasticity of about 278mm/100 in accordance with ASTM D-926-08 and a vinyl content of 0.188 wt. % was introduced into the Colmec^{™} CTM-65 mixer in combination with a small amount of a processing aid in the form of between 2 and 5 wt. % of a vinyl terminal poly(dimethylsiloxane-co-methylvinylsiloxane) having a viscosity of 370 mPa.s at 25°C using a Brookfield^{™} rotational viscometer with a cone plate arrangement with cone CP-52 at 12rpm.

The above was stirred, as 40 wt. % of untreated fumed silica, commercially available as CAB-O-SIL^{™} MS-75D from Cabot Corporation and about 4 wt. % of a filler treating agent comprising a short chain dimethylhydroxy terminated polytrifluoropropylmethyl siloxane having an average DP of between 5 and 15 were gradually introduced into the Colmec^{™} CTM-65 mixer and were mixed into the gum at a speed of about 45-60 rpm. Mixing was undertaken in a nitrogen atmosphere once the silica had been introduced. The ingredients were introduced at approximately 25°C but the effect of shear mixing gradually raised the temperature inside the mixer to within the region of between 50 and 80°C. Once the ingredients were satisfactorily inter-mixed a heating step was untaken, keeping the base product at 150°C for about 60 minutes at a speed of about 15rpm in order to ensure removal of volatiles resulting from the in-situ treatment of the filler surface to render it hydrophobic and to form a fluorosilicone rubber base material.

Subsequently the fluorosilicone base was extruded from the Colmec^{™} CTM-65 mixer and allowed to cool to a temperature below 90°C.

The resulting fluorosilicone rubber base was then mixed with additional fluorosilicone gum in a sigma blade mixer thereby reducing or cutting-back the filler content from 40 wt. % to 20 wt. %. Samples of the resulting base containing 20 wt. % reinforcing filler were then tested for the variation of plasticity with time, with the results provided in Table 1 below. Comps. 1 and 2 were also prepared with only 20wt. % reinforcing filler from the start and as such no reducing or cutting-back step occurred.

Comp. 1 followed the exact same process as described in Ex. 1 with the exception that the amount of filler introduced into the Colmec^{™} CTM-65 mixer was 20 wt.% and as such no reduction or cut-back step was required.

In comp. 2 the same ingredients and amounts were utilised to make the base and subsequently compound as was used for comp. 1 but in this instance, mixing was undertaken using a sigma blade mixer.

The plasticity properties of these were then compared with Ex. 1.

Subsequently 1.2 parts per hundred (pph) of 2,4-dichlorobenzoyl peroxide was introduced into the uncatalyzed fluorosilicone rubber base to render it curable by way milling on a two roll- mill and the resulting cured elastomeric material was assessed for its cured physical properties. Again, the results are provided in Table 1 where a comparison is made with the cured elastomeric materials of comp. 1 and 2.A comp. 3 was also commenced in which an attempt was made to introduce 40 wt. % of the filler into gum using a sigma blade mixer and as such comp. 3 was an attempt to repeat Ex. 1 using a sigma blade mixer. However, it proved impossible to make a continuous base containing 40 wt. % of filler in such a mixer. Some filler would not incorporate and the body of the base was "crumbly" and could not be made as a satisfactory continuous mass. Hence, it was deemed impossible to undertake physical property testing on comp. 3 which is consequently omitted from Table 1 below.

**Table 1. Comparisons of properties of Ex. 1 and Comps. 1 and 2**

| | Ex. 1 | Comp. 1 | Comp. 2 |
|---|---|---|---|
| Plasticity after 1 Hr (mm/100) | 220 | 283 | 277 |
| Plasticity after 7-day Aging at RT (mm/100) | 232 | 297 | 287 |
| Plasticity after 4 days @ 70°C (mm/100) | 248 | 307 | 292 |
| Elongation at break (%) | 475 | 430 | 423 |
| Post-Cured Elongation at break (%) | 451 | 439 | 399 |
| Tear Strength (kN/m) | 24.1 | 21.5 | 15.4 |

All plasticity results are timed from the fresh milling of the base on a two-roll mill following extrusion of the base from the mixer and after reaching 25°C in the case of Ex. 1 and from the completion of preparation and fresh milling after reaching 25°C of comp. 1 and 2 and were measured in accordance with ASTM D-926-08. Elongation at break was measured in accordance with ASTM D412, post-cured samples were post cured at a temperature of 200°C for 4 hours. Tear strength results were measured in accordance with ASTM D624 using DIE B.

It can be seen that the Ex. 1 results made using a base prepared as described herein gave lower plasticity results than both comp. 1 and comp. 2 showing that the base prepared by the process herein is more easily handled by users of the base when compounding. It will also be noted that bases prepared using the conical screw dump extruder show improvement over bases prepared using a sigma blade type mixer.

The above plasticity results seem to be consistent with the physical property results of Table 1, in that the best results are achieved using the process described herein and the poorest being those using the sigma blade type mixer. It will be appreciated that Ex. 1 has a more efficient base making process because it is able to integrate a greater amount of filler into a continuous base rendering the process more efficient than the sigma blade process which will require significantly more energy to mix filler into the gum because of the presence of a much greater amount of gum.

A further series of examples and comparatives (Ex. 2 and Comps. 4 to 7) were prepared using a dimethyl vinyl terminated polydimethylsiloxane gum (i.e., non-fluorinated).

In each of Ex. 2 and Comps. 4 to 7) it was attempted to prepare a series of uncatalyzed silicone rubber bases. In Ex. 2 a silicone rubber base was prepared in accordance with the process described herein using a Colmec^{™} CTM-65 mixer as the conical screw dump extruder. A dimethyl vinyl terminated polydimethylsiloxane gum having a Williams plasticity of about 148mm/100 in accordance with ASTM D-926-08 and a vinyl content of 0.012% was introduced into the Colmec^{™} CTM-65 mixer in combination with a small amount of a processing aid in the form of between 2 and 5 wt. % of a vinyl terminal poly(dimethylsiloxane-co-methylvinylsiloxane) having a viscosity of 370 mPa.s at 25°C using a Brookfield^{™} rotational viscometer with a cone plate arrangement with cone CP-52 at 12rpm.

The above was stirred, as 40 wt. % of untreated fumed silica, commercially available as CAB-O-SIL^{™} MS-75D from Cabot Corporation and about 4 wt. % of a filler treating agent comprising a short chain dimethylhydroxy terminated polydimethylsiloxane having an average DP of between 5 and 15 were gradually introduced into the Colmec^{™} CTM-65 mixer and were mixed into the gum at a speed of about 45-60 rpm. Mixing was undertaken in a nitrogen atmosphere once all the silica had been introduced. The ingredients were introduced at approximately 25°C but the effect of shear mixing gradually raised the temperature inside the mixer to within the region of between 50 and 80°C. Once the ingredients were satisfactorily inter-mixed a heating step was untaken, keeping the base product at 150°C for about 60 minutes at a speed of about 15rpm in order to ensure removal of volatiles resulting from the in-situ treatment of the filler surface to render it hydrophobic and to form a uncatalyzed silicone rubber base.

Subsequently the silicone rubber base was extruded from the Colmec^{™} CTM-65 mixer and allowed to cool to a temperature below 90°C.

The resulting silicone rubber base of Ex. 2 was then mixed with additional dimethyl vinyl terminated polydimethylsiloxane gum as described above in a sigma blade mixer into which was added sufficient dimethyl vinyl terminated polydimethylsiloxane gum while mixing to reduce or cut-back the filler content from 40 wt. % to 20 wt. % of the base. Samples of the resulting base containing 20 wt. *%* reinforcing filler were then tested for the variation of plasticity with time, with the results provided in Table 2 below.

Comp. 4 followed the exact same process as described for Ex. 2 with the exception that the amount of filler introduced into the Colmec^{™} CTM-65 mixer was 20 wt.% and as such no reduction or cut-back step was required. In comp. 5 the same ingredients and amounts were utilised to make the base and subsequently compound composition as was used for comp. 4 but in this instance base preparation was undertaken using a sigma blade mixer. Comps. 6 and 7 were carried out using the same ingredients as Ex. 2 in which an attempt was made to introduce 40 wt. % of the filler into the silicone rubber gum using a sigma blade mixer (comp. 6) and a compression-style sigma-blade mixer (comp. 7).

Subsequently 1.2 parts per hundred (pph) of 2,4-dichlorobenzoyl peroxide was introduced into the uncatalyzed silicone rubber base to render it curable by milling on a two roll- mill and then the resulting compound composition was cured for a period of 5 mins at 250°F (about 121°C). The resulting cured elastomer material was assessed regarding several physical properties. Again, the results are provided in Table 2 where a comparison is made with the cured elastomers resulting from the preparation of elastomeric materials of comp. 4 and 5.

It was found that in the case of Comp. 6, similar to Comp. 3 the base would not mass continuously. It crumbled and would not come back together. Furthermore, repeating Comp. 6 but using the compression-style sigma-blade mixer (Comp. 7) could be seen to have not been able to achieve massing when using 40 wt. % filler despite the additional compression using a fixed plate which reduces the free volume in the mixer to <50% of its original volume, resulting in a downward compression force on the base equal to the upward force from the mixing blades; i.e., the addition of a compression plate to the sigma blade set up did not lead to a noticeable improvement regarding massing. Hence, comps. 6 and 7 could not be reduced (cut-back) or cured and as such were not tested for their physical properties.

Plasticity results for the base and physical property results for the resulting elastomers are depicted below in Table 2 with respect to Ex. 2 and Comp. 6 and 7.

**Table 2**

| | Ex. 2 | Comp. 4 | Comp. 5 |
|---|---|---|---|
| Plasticity after 1 Hr (mm/100) | 157 | 170 | 178 |
| Plasticity after 7-day Aging at RT (mm/100) | 185 | 189 | 215 |
| Plasticity after 4 days @ 70°C (mm/100) | 216 | 218 | 253 |
| **Elongation** at break (%) | 632 | 620 | 625 |
| Post-Cured Elongation at break (%) | 560 | 544 | 492 |
| Tear Strength (kN/m) | 27.3 | 23.5 | 21.1 |

The test methodology used was exactly the same as with respect to the results in Table 1 above.

It can be seen that the Ex. 2 results made using a base prepared as described herein gave lower plasticity results than both comp. 4 and comp. 5 showing that the base prepared by the process herein is more easily handled by users of the base when compounding. It will also be noted that bases prepared using the conical screw dump extruder show improvement over bases prepared using a sigma blade type mixer.

The above plasticity results seem to be consistent with the physical property results of Table 1, in that the best results are achieved using the process described herein and the poorest being those using the sigma blade type mixer. It will be appreciated that Ex. 1 has a more efficient base making process because it is able to integrate a greater amount of filler into a continuous base rendering the process more efficient than the sigma blade process which will require significantly more energy to mix filler into the gum because of the presence of a much greater amount of gum.

In a further series of examples, the ability to introduce a non-reinforcing filler aluminium trihydrate which is often include in silicone elastomers as a flame retardant and smoke suppressant non-reinforcing filler was assessed to compare saturation levels.

In Ex. 3 the exact same process as Ex. 2 was undertaken using the Colmec^{™} CTM-65 mixer to prepare an uncatalyzed base with the exception that an alternative silicone gum was used. The silicone gum was a vinyl dimethyl terminated polyvinylmethyldimethylsiloxane copolymer with Williams plasticity of 149.6mm/100 and a vinyl content of 0.0654 wt. %. Also, in Ex. 3 no processing aid was used in combination with the gum and no catalyst was added as only an uncatalyzed base was prepared. After the reduction/cut-back step to add more gum so that the base only comprised 20 wt.% reinforcing silica filler, aluminium trihydrate was gradually introduced into the Ex. 3 base until a saturation level of 170 pph of aluminium trihydrate had been added to the base (61.5 wt.% of total composition of gum +reinforcing filler + treating agent + aluminium trihydrate).Two further comparatives were prepared, Comp. 8 and comp. 9. In comp.8 a silicone rubber base was prepared containing 20wt. % of silica filler without the reduction/cut-back step. This base also had aluminium trihydrate gradually introduced until a saturation level of 150 pph had been introduced after which the base started to crumble. Hence, the base in Ex. 3 is shown to be able to be able to accommodate a greater amount of aluminium trihydrate than could comp. 8. In the case of comp. 9 this was prepared in the exact same manner as comp. 8 with the sole difference being that the base comprising 20 wt. % silica reinforcing filler was prepared using a sigma blade mixer. In the case of comp. 9 once the base comprising 20 wt. % silica reinforcing filler had been prepared aluminium trihydrate was gradually introduced until a saturation level of only 50 pph had been introduced after which the base started to crumble.

Hence, it will be appreciated that a silicone rubber base having a 20 wt. % reinforcing filler content which is content is reduced from at least 40 wt. % using a reduction/cut-back step using a conical screw dump extruder is surprisingly able to accommodate significantly more aluminium trihydrate before saturation is reached than either a base containing 20 wt. % reinforcing filler content which had been prepared without the reduction/cut-back step or especially a base containing 20 wt. % reinforcing filler content which had been prepared without the reduction/cut-back step in a sigma blade mixer.

In Ex. 4 and Ex. 5 a base composition prepared using with 45 wt. % of the starting ingredient (b) was first prepared. Ex. 4 was reduced to base containing 38.5 wt. % reinforcing filler and Ex. 5 was reduced to a base containing 32 wt. % reinforcing filler. A dimethyl vinyl terminated polydimethylsiloxane gum having a Williams plasticity 148mm/100 in accordance with ASTM D-926-08 and a vinyl content of 0.012% was introduced into the Colmec^{™} CTM-65 mixer in combination with a small amount of a processing aid in the form of between 2 and 5 wt. % of a vinyl terminal poly(dimethylsiloxane-co-methylvinylsiloxane) having a viscosity of 370 mPa.s at 25°C using a Brookfield^{™} rotational viscometer with a cone plate arrangement with cone CP-52 at 12rpm.

The above was stirred, as said 45 wt. % of untreated fumed silica, commercially available as CAB-O-SIL^{™} MS-75D from Cabot Corporation and about 4 wt. % of a filler treating agent comprising a short chain dimethylhydroxy terminated polydimethylsiloxane having an average DP of between 5 and 15 were gradually introduced into the Colmec^{™} CTM-65 mixer and were mixed into the gum at a speed of about 45-60 rpm. Mixing was undertaken in a nitrogen atmosphere once all the silica had been introduced. The ingredients were introduced at approximately 25°C but the effect of shear mixing gradually raised the temperature inside the mixer to within the region of between 50 and 80°C. Once the ingredients were satisfactorily inter-mixed a heating step was untaken, keeping the base product at 150°C for about 60 minutes at a speed of about 15rpm in order to ensure removal of volatiles resulting from the in-situ treatment of the filler surface to render it hydrophobic and to form a uncatalyzed silicone rubber base.

Subsequently the silicone rubber base was cooled to under 60°C in the Colmec^{™} CTM-65 mixer before being extruded therefrom. In this instance, the extruded silicone rubber base was in fact returned to the Colmec^{™} CTM-65 mixer for step (v), the reduction /cut back to take place. In Ex. 4 sufficient dimethyl vinyl terminated polydimethylsiloxane gum having a Williams plasticity 148mm/100 in accordance with ASTM D-926-08 and a vinyl content of 0.012% was introduced into the Colmec^{™} CTM-65 mixer to enable a final base product with a total of 38.5 wt. % of reinforcing filler after step (v).

In Example 5 the exact same process was undertaken with the exception that more gum was introduced instep (v) such that a final base product with a total of 32.0 wt. % reinforcing filler was obtained.

In each of Ex. 4 and Ex. 5 a compound was made in accordance with step (vi) herein and consequently resulting samples of each were prepared by introducing 1.2 parts per hundred (pph) of 2,4-dichlorobenzoyl peroxide into the uncatalyzed silicone rubber base to render it curable by milling on a two roll- mill and then the resulting compound composition was cured for a period of 5 mins at 250°F (about 121°C). In this instance some samples of both Ex. 4 and Ex. 5 were post-cured post cured at a temperature of 200°C for 4 hours.

The physical properties of the resulting cured silicone elastomers were assessed and results are provided in Table 3 below. A sample of the original base material having 45 wt. % of reinforcing filler which had had peroxide catalyst milled in in the same manner (Ref. 1) was also assessed for its physical properties. The same test methods were used as mentioned above.

**Table 3**

| | Ref. 1 | Ex. 4 | Ex. 5 |
|---|---|---|---|
| Shore A hardness Elongation at break (%) | 53.9 | 45.3 | 32.8 |
| Elongation at break (%) | 218 | 281 | 349 |
| Post-Cured Elongation at break (%) | 162 | 261 | 320 |
| Modulus at 100% extension (MPa) | 5.18 | 2.99 | 1.89 |

These results show that it is possible to prepare a high viscosity base incorporating high levels of silica filler and can then reduce or cut it back the filler content to other lesser filler loadings successfully making a base with an acceptable range of properties at each loading.

## Claims

1. A process for the preparation of an uncatalyzed (fluoro)silicone rubber base which is prepared by the introduction of reinforcing fillers and optionally hydrophobing treating agents into one or more silicone polymers, fluorosilicone polymers or copolymers thereof, in each instance said one or more silicone polymers, fluorosilicone polymers or copolymers thereof having a Williams plasticity of at least 100mm/100 in accordance with ASTM D-926-08, which process comprises the steps of:
(i) Introducing, as a first starting ingredient the one or more silicone polymers, fluorosilicone polymers or copolymers thereof in each instance having a Williams plasticity of at least 100mm/100 in accordance with ASTM D-926-08, into a mixing chamber of a mixer at approximately 25°C optionally in an inert atmosphere and mixing;
(ii) Gradually introducing, as a second starting ingredient, one or more reinforcing fillers and optionally a third starting ingredient, one or more hydrophobing filler treating agents into the mixing chamber of the mixer whilst continuing mixing until the mixer has been charged with a predetermined amount of reinforcing filler of at least 38 wt. % of the total base starting ingredients to form a base mixture;
(iii) Optionally maintaining the temperature of the base mixture in the mixing chamber within a pre-determined range of from 100 and 200°C for a period of up to 6 hours to remove volatiles from the step (ii), base mixture, to form a step (iii) base mixture which step (iii), when utilised, may be carried out under vacuum;
(iv) Cooling the resulting step (ii) base mixture or step (iii) base mixture to a temperature between 25 °C and 120°C; and prior to, during or subsequent to step (iv);
(v) Reducing the wt. % of reinforcing filler in the step (ii) base mixture or step (iii) base mixture to a pre-defined amount by mixing the step (ii) base mixture or step (iii) base mixture with additional one or more silicone polymers, fluorosilicone polymers or copolymers thereof having a Williams plasticity of at least 100mm/100 in accordance with ASTM D-926-08, to form an uncatalyzed (fluoro)silicone rubber base;
**characterised in that** the mixer utilised for at least steps (i), (ii) and (iii) is a conical screw dump extruder comprising a conical twin screw mixing chamber, said conical twin screw mixing chamber housing two counter-rotating conical screws converging towards an extrusion die having an entrance and an exit wherein passage through said extrusion die is controlled by an occlusion means such that the exit of said extrusion die is adapted to be closed by the occlusion means until the product of step (iii), (iv) or (v) is to be extruded from said conical screw dump extruder and opened subsequent to step (iii), (iv) or (v) if or when said uncatalyzed (fluoro)silicone rubber base is to be further processed or stored outside said conical screw dump extruder such that during mixing the base mixture is driven towards extrusion die by the pair of counter-rotating conical screws, and then forced to go back when the extrusion die is closed by the occlusion means and then subsequent to step (iii), (iv) or (v) is opened, to allow the product of said step (iii), (iv) or (v) to be extruded through said extrusion die for further processing and/or storage.

2. A process in accordance with claim 1 wherein the base mixture of step (ii) and the product of step (iv) contain from 39 to 55 wt. % of reinforcing filler.

3. A process in accordance with claim 1 or 2 wherein the silicone polymers, fluorosilicone polymers or copolymers thereof in each instance having a Williams plasticity of at least 100mm/100 in accordance with ASTM D-926-08, are selected from a dialkylalkenyl terminated polydimethylsiloxane; a dialkylalkenyl terminated dimethylmethylphenylsiloxane; a trialkyl terminated dimethylmethylvinyl polysiloxane; a dialkylvinyl terminated dimethylmethylvinyl polysiloxane copolymer; a dialkylvinyl terminated methylphenylpolysiloxane, a dialkylalkenyl terminated methylvinylmethylphenylsiloxane; a dialkylalkenyl terminated methylvinyldiphenylsiloxane; a dialkylalkenyl terminated methylvinyl methylphenyl dimethylsiloxane; a trimethyl terminated methylvinyl methylphenylsiloxane; a trimethyl terminated methylvinyl diphenylsiloxane; or a trimethyl terminated methylvinyl methylphenyl dimethylsiloxane.

4. A process in accordance with claim 1 or 2 wherein the silicone polymers, fluorosilicone polymers or copolymers thereof in each instance having a Williams plasticity of at least 100mm/100 in accordance with ASTM D-926-08, are selected from trimethyl terminated polymethyltrifluoropropylsiloxane,
dimethylalkenyl terminated polymethyltrifluoropropylsiloxane, dimethylsilanol terminated polymethyltrifluoropropylsiloxane trimethyl terminated polymethylperfluoropropylsiloxane, dimethylalkenyl terminated polymethylperfluoropropylsiloxane, or dimethylsilanol terminated polymethyltrifluoropropylsiloxane.

5. A process in accordance with any preceding claim wherein the additional one or more silicone polymers, fluorosilicone polymers or copolymers thereof having a Williams plasticity of at least 100mm/100 in accordance with ASTM D-926-08 added in step (v) may be the same or different from those introduced in step (i).

6. A process in accordance with any preceding claim wherein silicone polymers, fluorosilicone polymers or copolymers thereof having a Williams plasticity of less than 100 mm/100 and/or silicone polymers, fluorosilicone polymers or copolymers having a viscosity of from 10,000mPa.s at 25°C to 500, 000mPa.s at 25°C are introduced during step (i) and/or step (v) of the process up to a cumulative total of 10 wt. % of the total base starting ingredients.

7. A process in accordance with any preceding claim wherein in step (v) the wt. % of reinforcing filler in the uncatalyzed (fluoro)silicone rubber base is reduced to an amount of from 15wt. % to 30 wt. % based on the wt. % of the total base starting ingredients by mixing the product of step (iv) with additional one or more silicone polymers, fluorosilicone polymers or copolymers thereof having a Williams plasticity of at least 100mm/100 in accordance with ASTM D-926-08, to form the step (v) product.

8. A process in accordance with any preceding claim wherein cooling step (iv) of the (fluoro)silicone rubber base manufacturing process takes place;
(I) completely in the conical screw dump extruder used to make the uncatalyzed (fluoro)silicone rubber base in which case the resulting uncatalyzed (fluoro)silicone rubber base is extruded cold at a temperature in the region of 30 to 40°C;
(II) partially in the conical screw dump extruder used to make the uncatalyzed (fluoro)silicone rubber base in which case the resulting uncatalyzed (fluoro)silicone rubber base is extruded at a moderate temperature in the region of 50 to 80°C and is then transferred to an alternative means for cooling further; or
(III) completely outside of the conical screw dump extruder used to make the uncatalyzed (fluoro)silicone rubber base in which case the resulting uncatalyzed (fluoro)silicone rubber base is extruded "hot" at a temperature of from 80°C to 120°C, alternatively at a temperature of from 90°C to 120°C and then being transferred to an alternative means for cooling.

9. A process in accordance with claim 8 wherein cooling outside the conical screw dump extruder is undertaken in a second "cooling" conical screw dump extruder, a pan or other container allowing the conical screw dump extruder used to make the uncatalyzed (fluoro)silicone rubber base to be re-used to make a further batch of uncatalyzed (fluoro)silicone rubber base.

10. A process in accordance with any one of claims 1 to 9 wherein after step (iv) or (v) the resulting step (iv) or step (v) product is pelletised or dusted with a suitable powder prior to storage.

11. A process in accordance with any one of claims 1 to 10 wherein the process for the preparation of an uncatalyzed (fluoro)silicone rubber base forms part of a continuous compounding process.

12. A process in accordance with claim 1wherein there is an additional step (vi) which occurs simultaneously with or subsequent to said step (v), which step (v) is subsequent to step (iv) and wherein step (vi) comprises introducing at a temperature of between 25°C and 60°C, at least one catalyst or vulcanising agent and optionally one or more additives, selected from cross-linkers, cure inhibitors, additional fillers, pigments, property modifiers and the like to provide a catalysed (fluoro)silicone rubber compound.

13. An uncatalyzed (fluoro)silicone rubber base, which is the product of the process in accordance with any one of claims 1 to 10 and/or a catalysed (fluoro)silicone rubber compound which is the product of the process in accordance with claim 10.

14. An uncatalyzed (fluoro)silicone rubber base, which is obtained or obtainable by way of the process in accordance with any one of claims 1 to 10.

15. Use of a conical screw dump extruder comprising a conical twin screw mixing chamber, said conical twin screw mixing chamber housing two counter-rotating conical screws converging towards an extrusion die having an entrance and an exit wherein passage through said extrusion die is controlled by an occlusion means such that the exit of said extrusion die is adapted to be closed by the occlusion means in a process for the preparation of an uncatalyzed (fluoro)silicone rubber base which is prepared by the introduction of reinforcing fillers and optionally hydrophobing treating agents into one or more silicone polymers, fluorosilicone polymers or copolymers thereof, in each instance said one or more silicone polymers, fluorosilicone polymers or copolymers thereof having a Williams plasticity of at least 100mm/100 in accordance with ASTM D-926-08, which process comprises the steps of:
(i) Introducing, as a first starting ingredient the one or more silicone polymers, fluorosilicone polymers or copolymers thereof in each instance having a Williams plasticity of at least 100mm/100 in accordance with ASTM D-926-08, into a mixing chamber of a mixer at approximately 25°C optionally in an inert atmosphere and mixing;
(ii) Gradually introducing, as a second starting ingredient, one or more reinforcing fillers and optionally a third starting ingredient, one or more hydrophobing filler treating agents into the mixing chamber of the mixer whilst continuing mixing until the mixer has been charged with a predetermined amount of reinforcing filler of at least 38 wt. % of the total base starting ingredients to form a base mixture;
(iii) Optionally maintaining the temperature of the base mixture in the mixing chamber within a pre-determined range of from 100 and 200 °C for a period of up to 6 hours to remove volatiles from the step (ii), base mixture, to form a step (iii) base mixture which step (iii), when utilised, may be carried out under vacuum;
(iv) Cooling the resulting step (ii) base mixture or step (iii) base mixture to a temperature between 25 °C and 120 °C; and prior to, during or subsequent to step (iv)
(v) Reducing the wt. % of reinforcing filler in the step (ii) base mixture or step (iii) base mixture to a pre-defined amount by mixing the step (ii) base mixture or step (iii) base mixture with additional one or more silicone polymers, fluorosilicone polymers or copolymers thereof having a Williams plasticity of at least 100mm/100 in accordance with ASTM D-926-08, to form an uncatalyzed (fluoro)silicone rubber base;
Wherein during mixing the base mixture is driven towards extrusion die by the pair of counter-rotating conical screws, and then forced to go back when the extrusion die is closed by the occlusion means and then subsequent to step (iii), (iv) or (v) is opened, to allow the respective product of said step (iii), (iv) or (v) to be extruded through said extrusion die for further processing and/or storage.

## Patentansprüche

1. Verfahren für die Herstellung einer unkatalysierten (Fluor-)Silikonkautschukbasis, die durch die Einbringung verstärkender Füllstoffe und gegebenenfalls hydrophobierender Behandlungsmittel in ein oder mehrere Silikonpolymere, Fluorsilikonpolymere oder Copolymere davon hergestellt wird, wobei in jeder Instanz das eine oder die mehreren Silikonpolymere, Fluorsilikonpolymere oder Copolymere davon eine Williams-Plastizität von mindestens 100 mm/100 gemäß ASTM D-926-08 aufweisen, wobei das Verfahren die Schritte umfasst:
(i) Einbringen, als einen ersten Ausgangsbestandteil, des einen oder der mehreren Silikonpolymere, Fluorsilikonpolymere oder Copolymere davon, die in jeder Instanz eine Williams-Plastizität von mindestens 100 mm/100 gemäß ASTM D-926-08 aufweisen, in eine Mischkammer eines Mischers bei etwa 25 °C, gegebenenfalls in einer inerten Atmosphäre, und Mischen;
(ii) allmähliches Einbringen, als einen zweiten Ausgangsbestandteil, eines oder mehrerer verstärkender Füllstoffe und gegebenenfalls, als einen dritten Ausgangsbestandteil, eines oder mehrerer hydrophobierender Füllstoffbehandlungsmittel in die Mischkammer des Mischers unter fortlaufendem Mischen, bis der Mischer mit einer zuvor bestimmten Menge an verstärkendem Füllstoff von mindestens 38 Gew.-% der gesamten Basisausgangsbestandteile beladen worden ist, um eine Basismischung zu bilden;
(iii) Gegebenenfalls Halten der Temperatur der Basismischung in der Mischkammer innerhalb eines zuvor bestimmten Bereichs von 100 und 200 °C für einen Zeitraum von bis zu 6 Stunden, um flüchtige Stoffe aus der Basismischung von Schritt (ii) zu entfernen, um eine Basismischung von Schritt (iii) zu bilden, wobei Schritt (iii), wenn er angewendet wird, unter Vakuum durchgeführt werden kann;
(iv) Kühlen der resultierenden Basismischung von Schritt (ii) oder Basismischung von Schritt (iii) auf eine Temperatur zwischen 25 °C und 120 °C; und vor, während oder im Anschluss an Schritt (iv);
(v) Reduzieren des Gew.-% an verstärkendem Füllstoff in der Basismischung von Schritt (ii) oder der Basismischung von Schritt (iii) auf eine vordefinierte Menge durch Mischen der Basismischung von Schritt (ii) oder der Basismischung von Schritt (iii) mit zusätzlich einem oder mehreren Silikonpolymeren, Fluorsilikonpolymeren oder Copolymeren davon, die eine Williams-Plastizität von mindestens 100 mm/100 gemäß ASTM D-926-08 aufweisen, um eine unkatalysierte (Fluor-)Silikonkautschukbasis zu bilden;
**dadurch gekennzeichnet, dass** der Mischer, der für mindestens die Schritte (i), (ii) und (iii) genutzt wird, ein Konisch-Schnecken-Entleerungsextruder ist, umfassend eine konische Doppelschnecken-Mischkammer, wobei die konische Doppelschnecken-Mischkammer zwei gegenläufig rotierende konische Schnecken aufnimmt, die in Richtung einer Extrusionsdüse, die einen Eingang und einen Ausgang aufweist, konvergieren, wobei ein Durchgang durch die Extrusionsdüse durch ein Verschlussmittel derart gesteuert wird, dass der Ausgang der Extrusionsdüse angepasst ist, um durch das Verschlussmittel geschlossen zu werden, bis das Produkt von Schritt (iii), (iv) oder (v) aus dem Konisch-Schnecken-Entleerungsextruder extrudiert werden soll, und im Anschluss an Schritt (iii), (iv) oder (v) geöffnet zu werden, falls oder wenn die unkatalysierte (Fluor-)Silikonkautschukbasis außerhalb des Konisch-Schnecken-Entleerungsextruder weiterverarbeitet oder gelagert werden soll, derart, dass die Basismischung während des Mischens durch das Paar gegenläufig rotierender konischer Schnecken in Richtung der Extrusionsdüse getrieben wird, und dann zurückgedrückt wird, wenn die Extrusionsdüse durch das Verschlussmittel geschlossen wird und dann im Anschluss an Schritt (iii), (iv) oder (v) geöffnet wird, um zu ermöglichen, dass das Produkt des Schritts (iii), (iv) oder (v) durch die Extrusionsdüse für Weiterverarbeitung und/oder Lagerung extrudiert wird.

2. Verfahren nach Anspruch 1, wobei die Basismischung von Schritt (ii) und das Produkt von Schritt (iv) von 39 bis 55 Gew.-% verstärkenden Füllstoff enthalten.

3. Verfahren nach Anspruch 1 oder 2, wobei die Silikonpolymere, Fluorsilikonpolymere oder Copolymere davon, die in jeder Instanz eine Williams-Plastizität von mindestens 100 mm/100 gemäß ASTM D-926-08 aufweisen, ausgewählt sind aus einem dialkylalkenylterminierten Polydimethylsiloxan; einem dialkylalkenylterminierten Dimethylmethylphenylsiloxan; einem trialkylterminiertes Dimethylmethylvinylpolysiloxan; einem dialkylvinylterminierten Dimethylmethylvinylpolysiloxancopolymer; einem dialkylvinylterminierten Methylphenylpolysiloxan, einem dialkylalkenylterminierten Methylvinylmethylphenylsiloxan; einem dialkylalkenylterminierten Methylvinyldiphenylsiloxan; einem dialkylalkenylterminierten Methylvinylmethylphenyldimethylsiloxan; einem trimethylterminierten Methylvinylmethylphenylsiloxan; einem trimethylterminierten Methylvinyldiphenylsiloxan; oder einem trimethylterminierten Methylvinylmethylphenyldimethylsiloxan.

4. Verfahren nach Anspruch 1 oder 2, wobei die Silikonpolymere, Fluorsilikonpolymere oder Copolymere davon, die in jeder Instanz eine Williams-Plastizität von mindestens 100 mm/100 gemäß ASTM D-926-08 aufweisen, ausgewählt sind aus trimethylterminiertem Polymethyltrifluorpropylsiloxan, dimethylalkenylterminiertem Polymethyltrifluorpropylsiloxan, dimethylsilanolterminiertem Polymethyltrifluorpropylsiloxan, trimethylterminiertem Polymethylperfluorpropylsiloxan, dimethylalkenylterminiertem Polymethylperfluorpropylsiloxan oder dimethylsilanolterminiertem Polymethyltrifluorpropylsiloxan.

5. Verfahren nach einem vorstehenden Anspruch, wobei das zusätzliche eine oder die mehreren Silikonpolymere, Fluorsilikonpolymere oder Copolymere davon, die eine Williams-Plastizität von mindestens 100 mm/100 gemäß ASTM D-926-08 aufweisen, die in Schritt (v) zugegeben werden, gleich oder verschieden von denen, die in Schritt (i) eingebracht werden, sein können.

6. Verfahren nach einem vorstehenden Anspruch, wobei Silikonpolymere, Fluorsilikonpolymere oder Copolymere davon, die eine Williams-Plastizität von weniger als 100 mm/100 aufweisen, und/oder Silikonpolymere, Fluorsilikonpolymere oder Copolymere, die eine Viskosität von 10.000 mPa.s bei 25 °C bis 500.000 mPa.s bei 25 °C aufweisen, während Schritt (i) und/oder Schritt (v) des Verfahrens bis zu einer kumulativen Gesamtheit von 10 Gew.-% der gesamten Basisausgangsbestandteile eingebracht werden.

7. Verfahren nach einem vorstehenden Anspruch, wobei in Schritt (v) der Gew.-% an verstärkendem Füllstoff in der unkatalysierten (Fluor-)Silikonkautschukbasis auf eine Menge von 15 Gew.- % bis 30 Gew.-%, bezogen auf den Gew.-% der gesamten Basisausgangsbestandteile, durch Mischen des Produkts von Schritt (iv) mit zusätzlich einem oder mehreren Silikonpolymeren, Fluorsilikonpolymeren oder Copolymeren davon, die eine Williams-Plastizität von mindestens 100 mm/100 gemäß ASTM D-926-08, aufweisen, reduziert wird, um das Produkt von Schritt (v) zu bilden.

8. Verfahren nach einem vorstehenden Anspruch, wobei der Kühlschritt (iv) des Fertigungsverfahrens der (Fluor-)Silikonkautschukbasis stattfindet;
(I) vollständig in dem Konisch-Schnecken-Entleerungsextruder, der verwendet wird, um die unkatalysierte (Fluor-)Silikonkautschukbasis zu produzieren, wobei in diesem Fall die resultierende unkatalysierte (Fluor-)Silikonkautschukbasis bei einer Temperatur in der Region von 30 bis 40 °C kalt extrudiert wird;
(II) teilweise in dem Konisch-Schnecken-Entleerungsextruder, der verwendet wird, um die unkatalysierte (Fluor-)Silikonkautschukbasis zu produzieren, wobei in diesem Fall die resultierende unkatalysierte (Fluor-)Silikonkautschukbasis bei einer moderaten Temperatur in der Region von 50 bis 80 °C extrudiert wird und dann zu einem alternativen Mittel zum Weiterkühlen transferiert wird; oder
(III) vollständig außerhalb des Konisch-Schnecken-Entleerungsextruders, der verwendet wird, um die unkatalysierte (Fluor-)Silikonkautschukbasis zu produzieren, wobei in diesem Fall die resultierende unkatalysierte (Fluor-)Silikonkautschukbasis bei einer Temperatur von 80 °C bis 120 °C, alternativ bei einer Temperatur von 90 °C bis 120 °C "heiß" extrudiert wird und dann zu einem alternativen Mittel zum Kühlen transferiert wird.

9. Verfahren nach Anspruch 8, wobei das Kühlen außerhalb des Konisch-Schnecken-Entleerungsextruders in einem zweiten "Kühlungs"-Konisch-Schnecken-Entleerungsextruder, einer Wanne oder einem anderen Behälter ausgeführt wird, wobei dem Konisch-Schnecken-Entleerungsextruder, der verwendet wird, um die unkatalysierte (Fluor-)Silikonkautschukbasis zu produzieren, ermöglicht wird, wiederverwendet zu werden, um eine weitere Charge unkatalysierter (Fluor-)Silikonkautschukbasis zu produzieren.

10. Verfahren nach einem der Ansprüche 1 bis 9, wobei nach Schritt (iv) oder (v) das resultierende Produkt von Schritt (iv) oder Schritt (v) vor Lagerung pelletiert oder mit einem geeigneten Pulver bestäubt wird.

11. Verfahren nach einem der Ansprüche 1 bis 10, wobei das Verfahren für die Herstellung einer unkatalysierten (Fluor-)Silikonkautschukbasis Teil eines fortlaufenden Compoundierverfahrens bildet.

12. Verfahren nach Anspruch 1, wobei ein zusätzlicher Schritt (vi) vorhanden ist, der gleichzeitig mit dem oder im Anschluss an den Schritt (v) erfolgt, wobei der Schritt (v) im Anschluss an Schritt (iv) ist, und wobei Schritt (vi) das Einbringen, bei einer Temperatur von zwischen 25 °C und 60 °C, mindestens eines Katalysator oder Vulkanisationsmittels und gegebenenfalls eines oder mehrerer Additive, ausgewählt aus Vernetzern, Härtungsinhibitoren, zusätzlichen Füllstoffen, Pigmenten, Eigenschaftsmodifikatoren und dergleichen, umfasst, um eine katalysierte (Fluor-)Silikonkautschukverbindung bereitzustellen.

13. Unkatalysierte (Fluor-)Silikonkautschukbasis, die das Produkt des Verfahrens nach einem der Ansprüche 1 bis 10 ist, und/oder katalysierte (Fluor-)Silikonkautschukverbindung, die das Produkt des Verfahrens nach Anspruch 10 ist.

14. Unkatalysierte (Fluor-)Silikonkautschukbasis, die durch das Verfahren nach einem der Ansprüche 1 bis 10 erhalten wird oder erhältlich ist.

15. Verwendung eines Konisch-Schnecken-Entleerungsextruders, umfassend eine konische Doppelschnecken-Mischkammer, wobei die konische Doppelschnecken-Mischkammer zwei gegenläufig rotierende konische Schnecken aufnimmt, die in Richtung einer Extrusionsdüse, die einen Eingang und einem Ausgang aufweist, konvergieren, wobei der Durchgang durch die Extrusionsdüse durch ein Verschlussmittel derart gesteuert wird, dass der Ausgang der Extrusionsdüse angepasst ist, um durch das Verschlussmittel geschlossen zu werden, in einem Verfahren für die Herstellung einer unkatalysierten (Fluor-)Silikonkautschukbasis, die durch die Einbringung verstärkender Füllstoffe und gegebenenfalls hydrophobierender Behandlungsmittel in ein oder mehrere Silikonpolymere, Fluorsilikonpolymere oder Copolymere davon hergestellt wird, wobei in jeder Instanz das eine oder die mehreren Silikonpolymere, Fluorsilikonpolymere oder Copolymere davon eine Williams-Plastizität von mindestens 100 mm/100 gemäß ASTM D-926-08 aufweisen, wobei das Verfahren die Schritte umfasst:
(i) Einbringen, als einen ersten Ausgangsbestandteil, des einen oder der mehreren Silikonpolymere, Fluorsilikonpolymere oder Copolymere davon, die in jeder Instanz eine Williams-Plastizität von mindestens 100 mm/100 gemäß ASTM D-926-08 aufweisen, in eine Mischkammer eines Mischers bei etwa 25 °C, gegebenenfalls in einer inerten Atmosphäre, und Mischen;
(ii) allmähliches Einbringen, als einen zweiten Ausgangsbestandteil, eines oder mehrerer verstärkender Füllstoffe und gegebenenfalls, als einen dritten Ausgangsbestandteil, eines oder mehrerer hydrophobierender Füllstoffbehandlungsmittel in die Mischkammer des Mischers unter fortlaufendem Mischen, bis der Mischer mit einer zuvor bestimmten Menge an verstärkendem Füllstoff von mindestens 38 Gew.-% der gesamten Basisausgangsbestandteile beladen worden ist, um eine Basismischung zu bilden;
(iii) Gegebenenfalls Halten der Temperatur der Basismischung in der Mischkammer innerhalb eines zuvor bestimmten Bereichs von 100 und 200 °C für einen Zeitraum von bis zu 6 Stunden, um flüchtige Stoffe aus der Basismischung von Schritt (ii) zu entfernen, um eine Basismischung von Schritt (iii) zu bilden, wobei Schritt (iii), wenn er angewendet wird, unter Vakuum durchgeführt werden kann;
(iv) Kühlen der resultierenden Basismischung von Schritt (ii) oder Basismischung von Schritt (iii) auf eine Temperatur zwischen 25 °C und 120 °C; und vor, während oder im Anschluss an Schritt (iv)
(v) Reduzieren des Gew.-% an verstärkendem Füllstoff in der Basismischung von Schritt (ii) oder der Basismischung von Schritt (iii) auf eine vordefinierte Menge durch Mischen der Basismischung von Schritt (ii) oder der Basismischung von Schritt (iii) mit zusätzlich einem oder mehreren Silikonpolymeren, Fluorsilikonpolymeren oder Copolymeren davon, die eine Williams-Plastizität von mindestens 100 mm/100 gemäß ASTM D-926-08 aufweisen, um eine unkatalysierte (Fluor-)Silikonkautschukbasis zu bilden;
wobei während des Mischens die Basismischung durch das Paar gegenläufig rotierender konischer Schnecken in Richtung der Extrusionsdüse getrieben wird und dann zurückgedrückt wird, wenn die Extrusionsdüse durch das Verschlussmittel geschlossen wird, und dann im Anschluss an Schritt (iii), (iv) oder (v) geöffnet wird, um zu ermöglichen, dass das jeweilige Produkt des Schritts (iii), (iv) oder (v) durch die Extrusionsdüse für Weiterverarbeitung und/oder Lagerung extrudiert wird.

## Revendications

1. Procédé destiné à la préparation d'une base de caoutchouc de (fluoro)silicone non catalysée qui est préparée par l'introduction de charges de renforcement et facultativement d'agents de traitement hydrophobants dans un ou plusieurs polymères de silicone, polymères de fluorosilicone ou des copolymères de ceux-ci, dans chaque cas ledit ou lesdits polymères de silicone, polymères de fluorosilicone ou copolymères de ceux-ci ayant une plasticité de Williams d'au moins 100 mm/100 conformément à la norme ASTM D-926-08, lequel procédé comprend les étapes consistant à :
(i) introduire, en guise de premier ingrédient de départ, le ou les polymères de silicone, polymères de fluorosilicone ou copolymères de ceux-ci, ayant dans chaque cas une plasticité de Williams d'au moins 100 mm/100 conformément à la norme ASTM D-926-08, dans une chambre de mélange d'un mélangeur à environ 25 °C éventuellement dans une atmosphère inerte et mélanger ;
(ii) introduire progressivement, en guise de deuxième ingrédient de départ, une ou plusieurs charges de renforcement et facultativement un troisième ingrédient de départ, un ou plusieurs agents de traitement de charge hydrophobe dans la chambre de mélange du mélangeur tout en continuant à mélanger jusqu'à ce que le mélangeur ait été chargé d'une quantité prédéterminée de charges de renforcement d'au moins 38 % en poids du total des ingrédients de départ de base pour former un mélange de base ;
(iii) maintenir éventuellement la température du mélange de base dans la chambre de mélange dans une plage prédéterminée allant de 100 à 200 °C pendant un laps de temps allant jusqu'à 6 heures pour éliminer les substances volatiles du mélange de base de l'étape (ii), pour former un mélange de base de l'étape (iii), laquelle étape (iii), lorsqu'elle est utilisée, peut être effectuée sous vide ;
(iv) refroidir le mélange de base de l'étape (ii) ou le mélange de base de l'étape (iii) ainsi obtenu à une température entre 25 °C et 120 °C ; et avant, pendant ou après l'étape (iv) ;
(v) réduire le % en poids de charges de renforcement dans le mélange de base de l'étape (ii) ou le mélange de base de l'étape (iii) à une quantité prédéfinie en mélangeant le mélange de base de l'étape (ii) ou le mélange de base de l'étape (iii) avec un ou plusieurs polymères de silicone, polymères de fluorosilicone ou copolymères supplémentaires de ceux-ci ayant une plasticité de Williams d'au moins 100 mm/100 conformément à la norme ASTM D-926-08, pour former une base de caoutchouc de (fluoro)silicone non catalysée ;
**caractérisé en ce que** le mélangeur utilisé pour au moins les étapes (i), (ii) et (iii) est une extrudeuse de vidage à vis conique comprenant une chambre de mélange à double vis conique, ladite chambre de mélange à double vis conique logeant deux vis coniques contrarotatives convergeant vers une filière d'extrusion ayant une entrée et une sortie dans lesquelles le passage à travers ladite filière d'extrusion est commandé par un moyen d'occlusion de telle sorte que la sortie de ladite filière d'extrusion est adaptée pour être fermée par le moyen d'occlusion jusqu'à ce que le produit de l'étape (iii), (iv) ou (v) soit extrudé à partir de ladite extrudeuse de vidage à vis conique et ouverte après l'étape (iii), (iv) ou (v) si ou lorsque ladite base de caoutchouc de (fluoro)silicone non catalysée doit être davantage traitée ou stockée à l'extérieur de ladite extrudeuse de vidage à vis conique de telle sorte que pendant le mélange, le mélange de base est entraîné vers la filière d'extrusion par la paire de vis coniques contrarotatives, puis forcée de revenir en arrière lorsque la filière d'extrusion est fermée par le moyen d'occlusion, puis à la suite de l'étape (iii), (iv) ou (v) est ouverte, pour permettre au produit de ladite étape (iii), (iv) ou (v) d'être extrudé à travers ladite filière d'extrusion pour un traitement et/ou un stockage ultérieurs.

2. Procédé selon la revendication 1 dans lequel le mélange de base de l'étape (ii) et le produit de l'étape (iv) contiennent de 39 à 55 % en poids de charges de renforcement.

3. Procédé selon la revendication 1 ou 2, dans lequel les polymères de silicone, les polymères de fluorosilicone ou les copolymères de ceux-ci, ayant dans chaque cas une plasticité de Williams d'au moins 100 mm/100 conformément à la norme ASTM D-926-08, sont choisis parmi un polydiméthylsiloxane à terminaison dialkylalcényle ; un diméthylméthylphénylsiloxane à terminaison dialkylalcényle ; un diméthylméthylvinylpolysiloxane à terminaison un trialkyle ; un copolymère de diméthylméthylvinylpolysiloxane à terminaison dialkylvinyle ; un méthylphénylpolysiloxane à terminaison dialkylvinyle, un méthylvinylméthylphénylsiloxane à terminaison dialkylalcényle ; un méthylvinyldiphénylsiloxane à terminaison dialkylalcényle ; un méthylvinylméthylphényldiméthylsiloxane à terminaison dialkylalcényle ; un méthylvinylméthylphénylsiloxane à terminaison triméthyle ; un méthylvinyldiphénylsiloxane à terminaison triméthyle ; ou un méthylvinylméthylphényldiméthylsiloxane à terminaison triméthyle.

4. Procédé selon la revendication 1 ou 2, dans lequel les polymères de silicone, les polymères de fluorosilicone ou les copolymères de ceux-ci, ayant dans chaque cas une plasticité de Williams d'au moins 100 mm/100 conformément à la norme ASTM D-926-08, sont choisis parmi le polyméthyltrifluoropropylsiloxane à terminaison triméthyle, le polyméthyltrifluoropropylsiloxane à terminaison diméthylalcényle, le polyméthyltrifluoropropylsiloxane à terminaison diméthylsilanol, le polyméthylperfluoropropylsiloxane à terminaison triméthyle, un polyméthylperfluoropropylsiloxane à terminaison diméthylalcényle, ou le polyméthyltrifluoropropylsiloxane à terminaison diméthylsilanol.

5. Procédé selon l'une quelconque revendication précédente, dans lequel le ou les polymères de silicone, polymères de fluorosilicone ou copolymères supplémentaires de ceux-ci ayant une plasticité de Williams d'au moins 100 mm/100 conformément à la norme ASTM D-926-08 ajoutés à l'étape (v) peuvent être identiques ou différents de ceux introduits à l'étape (i).

6. Procédé selon l'une quelconque revendication précédente, dans lequel les polymères de silicone, les polymères de fluorosilicone ou des copolymères de ceux-ci ayant une plasticité de Williams inférieure à 100 mm/100 et/ou les polymères de silicone, les polymères de fluorosilicone ou des copolymères de ceux-ci ayant une viscosité de 10 000 mPa.s à 25 °C à 500 000 mPa.s à 25 °C sont introduits pendant l'étape (i) et/ou étape (v) du procédé jusqu'à un total cumulé de 10 % en poids du total des ingrédients de départ de base.

7. Procédé selon l'une quelconque revendication précédente dans lequel à l'étape (v) le % en poids de charges de renforcement dans la base de caoutchouc de (fluoro)silicone non catalysée est réduit à une quantité de 15 % en poids à 30 % en poids en fonction du % en poids des ingrédients de départ de base totaux en mélangeant le produit de l'étape (iv) avec un ou plusieurs polymères de silicone, polymères de fluorosilicone ou copolymères de ceux-ci supplémentaires ayant une plasticité de Williams d'au moins 100 mm/100 conformément à la norme ASTM D-926-08, pour former le produit de l'étape (v).

8. Procédé selon l'une quelconque revendication précédente dans lequel a lieu une étape de refroidissement (iv) du procédé de fabrication de base de caoutchouc de (fluoro)silicone ;
(I) complètement dans l'extrudeuse de vidage à vis conique utilisée pour fabriquer la base de caoutchouc de (fluoro)silicone non catalysée auquel cas la base de caoutchouc de (fluoro)silicone non catalysée ainsi obtenue est extrudée à froid à une température de l'ordre de 30 à 40 °C ;
(II) partiellement dans l'extrudeuse de vidage à vis conique utilisée pour fabriquer la base de caoutchouc de (fluoro)silicone non catalysée auquel cas la base de caoutchouc de (fluoro)silicone non catalysée ainsi obtenue est extrudée à froid à une température modérée de l'ordre de 50 à 80 °C et est ensuite transférée vers un autre moyen pour un refroidissement supplémentaire ; ou
(III) complètement à l'extérieur de l'extrudeuse de vidage à vis conique utilisée pour fabriquer la base de caoutchouc de (fluoro)silicone non catalysée auquel cas la base de caoutchouc de (fluoro)silicone non catalysée est extrudée « à chaud » à une température allant de 80 °C à 120 °C, alternativement à une température allant de 90 °C à 120 °C, et étant ensuite transférée vers un autre moyen de refroidissement.

9. Procédé selon la revendication 8 dans lequel le refroidissement à l'extérieur de l'extrudeuse de vidage à vis conique est effectué dans une seconde extrudeuse de vidage à vis conique « de refroidissement », un bac ou un autre récipient permettant à l'extrudeuse de vidage à vis conique utilisée pour fabriquer la base de caoutchouc de (fluoro)silicone non catalysée d'être réutilisée pour fabriquer un lot supplémentaire de base de caoutchouc de (fluoro)silicone non catalysée.

10. Procédé selon l'une quelconque des revendications 1 à 9, dans lequel après l'étape (iv) ou (v), le produit ainsi obtenu de l'étape (iv) ou de l'étape (v) est transformé en pellets ou saupoudré d'une poudre appropriée juste avant le stockage.

11. Procédé selon l'une quelconque des revendications 1 à 10 dans lequel le procédé pour la préparation d'une base de caoutchouc de (fluoro)silicone non catalysée fait partie d'un procédé de compoundage continu.

12. Procédé selon la revendication 1 dans lequel il y a une étape supplémentaire (vi) qui se produit simultanément à ou après ladite étape (v), laquelle étape (v) est ultérieure à l'étape (iv) et dans lequel l'étape (vi) comprend l'introduction à une température comprise entre 25 °C et 60 °C, d'au moins un catalyseur ou agent de vulcanisation et facultativement d'un ou plusieurs additifs, choisis parmi agents réticulants, inhibiteurs de durcissement, charges supplémentaires, pigments, agents modificateurs de propriétés et similaires pour fournir un composé de caoutchouc de (fluoro)silicone catalysé.

13. Base de caoutchouc de (fluoro)silicone non catalysée, qui est le produit du procédé selon l'une quelconque des revendications 1 à 10 et/ou composé de caoutchouc de (fluoro)silicone catalysée qui est le produit du procédé selon la revendication 10.

14. Base de caoutchouc de (fluoro)silicone non catalysée, qui est obtenue ou peut être obtenue au moyen du procédé selon l'une quelconque des revendications 1 à 10.

15. Utilisation d'une extrudeuse de vidage à vis conique comprenant une chambre de mélange à double vis conique, ladite chambre de mélange à double vis conique logeant deux vis coniques contrarotatives convergeant vers une filière d'extrusion ayant une entrée et une sortie dans lesquelles le passage à travers ladite filière d'extrusion est commandé par un moyen d'occlusion de telle sorte que la sortie de ladite filière d'extrusion est adaptée pour être fermée par le moyen d'occlusion dans un procédé pour la préparation d'une base de caoutchouc de (fluoro)silicone non catalysée qui est préparée par l'introduction de charges de renforcement et éventuellement d'agents de traitement hydrophobants dans un ou plusieurs polymères de silicone, polymères de fluorosilicone ou des copolymères de ceux-ci, dans chaque cas ledit ou lesdits polymères de silicone, polymères de fluorosilicone ou copolymères de ceux-ci ayant une plasticité de Williams d'au moins 100 mm/100 conformément à la norme ASTM D-926-08, lequel procédé comprend les étapes consistant à :
(i) introduire, en guise de premier ingrédient de départ, le ou les polymères de silicone, polymères de fluorosilicone ou copolymères de ceux-ci, ayant dans chaque cas une plasticité de Williams d'au moins 100 mm/100 conformément à la norme ASTM D-926-08, dans une chambre de mélange d'un mélangeur à environ 25 °C éventuellement dans une atmosphère inerte et mélanger ;
(ii) introduire progressivement, en guise de deuxième ingrédient de départ, une ou plusieurs charges de renforcement et facultativement un troisième ingrédient de départ, un ou plusieurs agents de traitement de charge hydrophobe dans la chambre de mélange du mélangeur tout en continuant à mélanger jusqu'à ce que le mélangeur ait été chargé d'une quantité prédéterminée de charges de renforcement d'au moins 38 % en poids du total des ingrédients de départ de base pour former un mélange de base ;
(iii) maintenir éventuellement la température du mélange de base dans la chambre de mélange dans une plage prédéterminée allant de 100 à 200 °C pendant un laps de temps allant jusqu'à 6 heures pour éliminer les substances volatiles du mélange de base de l'étape (ii), pour former un mélange de base de l'étape (iii), laquelle étape (iii), lorsqu'elle est utilisée, peut être effectuée sous vide ;
(iv) refroidir le mélange de base de l'étape (ii) ou le mélange de base de l'étape (iii) ainsi obtenu à une température entre 25 °C et 120 °C ; et avant, pendant ou après l'étape (iv)
(v) réduire le % en poids de charges de renforcement dans le mélange de base de l'étape (ii) ou le mélange de base de l'étape (iii) à une quantité prédéfinie en mélangeant le mélange de base de l'étape (ii) ou le mélange de base de l'étape (iii) avec un ou plusieurs polymères de silicone, polymères de fluorosilicone ou copolymères supplémentaires de ceux-ci ayant une plasticité de Williams d'au moins 100 mm/100 conformément à la norme ASTM D-926-08, pour former une base de caoutchouc de (fluoro)silicone non catalysée ;
dans lequel, pendant le mélange, le mélange de base est entraîné vers la filière d'extrusion par la paire de vis coniques contrarotatives, puis forcé de revenir en arrière lorsque la filière d'extrusion est fermée par le moyen d'occlusion, puis à la suite de l'étape (iii), (iv) ou (v) est ouverte, pour permettre au produit respectif de ladite étape (iii), (iv) ou (v) d'être extrudé à travers ladite filière d'extrusion pour un traitement et/ou un stockage ultérieurs.
